# EUROPEAN PATENT SPECIFICATION

(11) **EP 1 865 218 B1**
(45) Date of publication and mention of the grant of the patent: **29.04.2009**
(21) Application number: 07010901.2
(22) Date of filing: 01.06.2007
(51) Int. Cl.: F16D 55/228, F16D 65/095

(54) **Opposed piston type disc brake**
Gegenkolben-Scheibenbremse
Frein à disque à pistons opposés

(30) Priority: 05.06.2006 JP 2006156159; 07.11.2006 JP 2006301887
(43) Date of publication of application: 12.12.2007
(73) Proprietor: AKEBONO BRAKE INDUSTRY CO., LTD., Chuo-ku Tokyo (JP)
(72) Inventor: Kobayashi, Daisuke, Tokyo (JP); Morimoto, Makoto, Tokyo (JP)
(74) Representative: Grünecker, Kinkeldey, Stockmair & Schwanhäusser Anwaltssozietät

(56) References cited:
- EP-A- 0 995 920
- EP-A- 1 548 316
- WO-A-03/071152
- JP-A- 2005 121 174

## Description

### BACKGROUND OF THE INVENTION

### <FIELD OF THE INVENTION>

The present invention relates to a disc brake used for braking a vehicle, more particularly to an opposed piston type disc brake having pistons on both sides of a rotor in a state of being opposed to each other.

### <RELATED ART>

A disc brake is widely used for braking a vehicle. In braking by the disc brake, a pair of pads arranged on both sides in an axial direction of a rotor rotated along with a wheel are pressed by pistons to both sides of the rotor. In a background art, disc brakes having various structures have been known, in recent years, an opposed piston type disc brake provided with pistons on both sides of a rotor in a state of being opposed to each other is increased to be used, since a stable braking force is exerted in the opposed piston type disc brake. In a background art, opposed piston type disc brakes having structures described in, for example. Patent References 1 through 12 have been known.
[Patent Reference 1] JP-A-05-106662
[Patent Reference 2] JP-A-07-127674
[Patent Reference 3] JP-A-08-159185
[Patent Reference 4] JP-A-08-254228
Patent Reference 5] JP-A-09-257063
[Patent Reference 6] JP-A-2003-120724
[Patent Reference 7] JP-A-2004-183904
[Patent Reference 8] JP-A-2005-121174
[Patent Reference 9] JP-A-2005-299930
[Patent Reference 10] JP-T-2005-517877
[Patent Reference 11] EP-A-1548316
[Patent Reference 12] EP-A-0995920

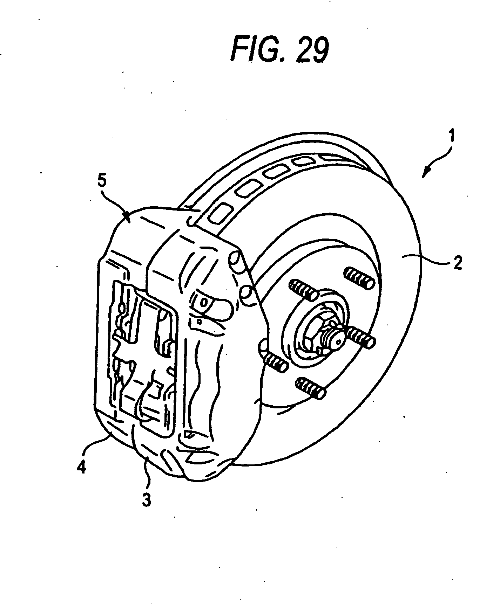

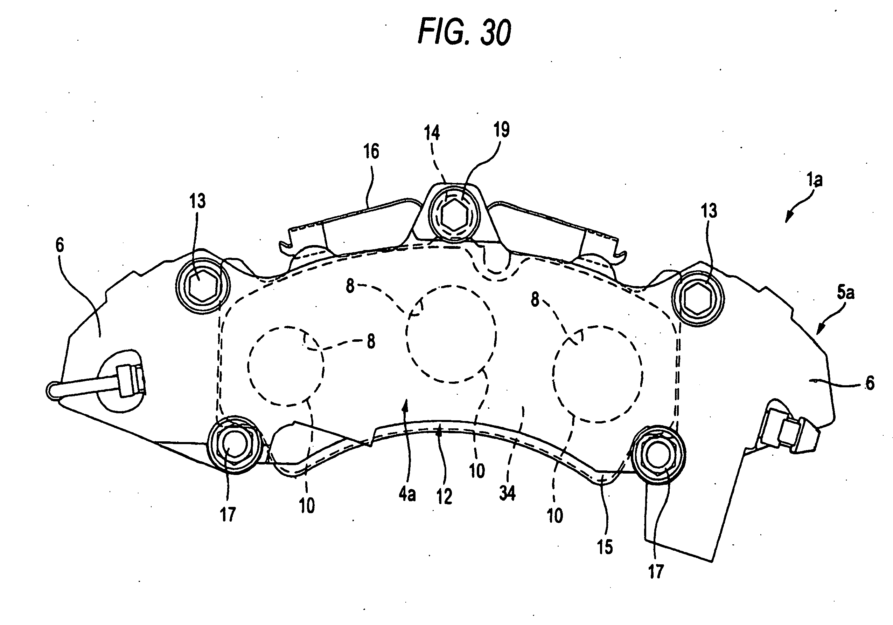

An explanation will be given of a basic structure of an opposed piston type disc brake in reference to Fig.29 and a specific structure in reference to Figs. 30 through 33 based on a description of Patent Reference 8 thereamong.

As shown by Fig. 29, an opposed piston type disc brake 1 is provided with a caliper 5 comprising an outer body portion 3 and an inner body portion 4 at a position of interposing a rotor 2 rotated along with a wheel. Further, an outer cylinder and an inner cylinder are provided at insides of the respective outer and inner body portions 3, 4 in a state of making opening portions of respective thereof opposed to each other by way of the rotor 2. Further, an outer piston and an inner piston are fitted in the outer cylinder and the inner cylinder in liquid tight and displaceably in an axial direction of the rotor 2. Further, the outer body portion 3 supports an outer pad, and the inner body portion 4 supports an inner pad displaceably in the axial direction of the rotor 2. In braking, a pressurized oil is fed to insides of the outer cylinder and the inner cylinder, and the outer pad and the inner pad are pressed to both the inner and the outer side faces of the rotor 2 by the outer piston and the inner piston.

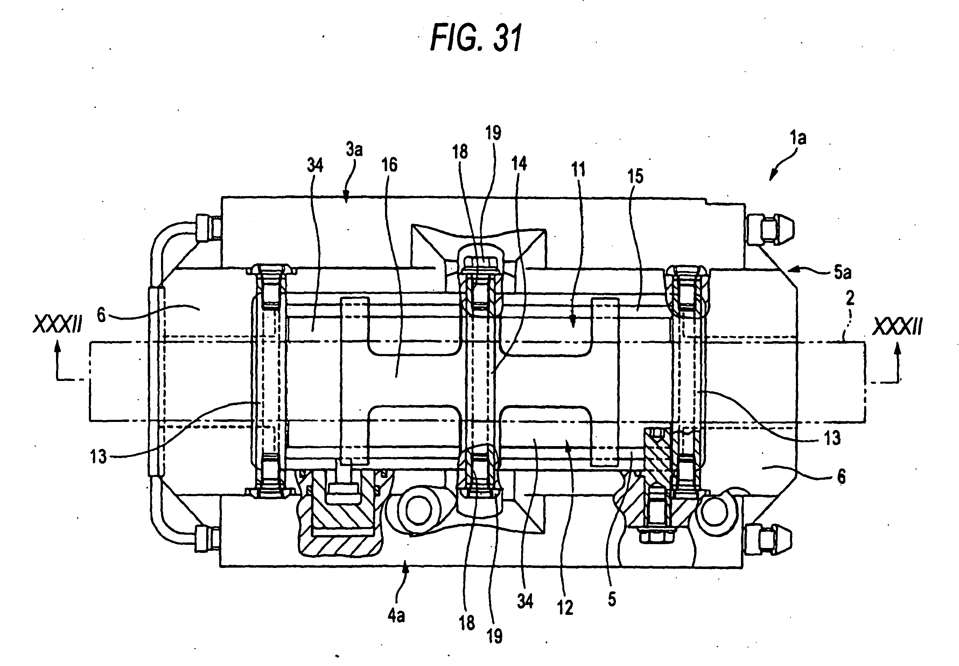

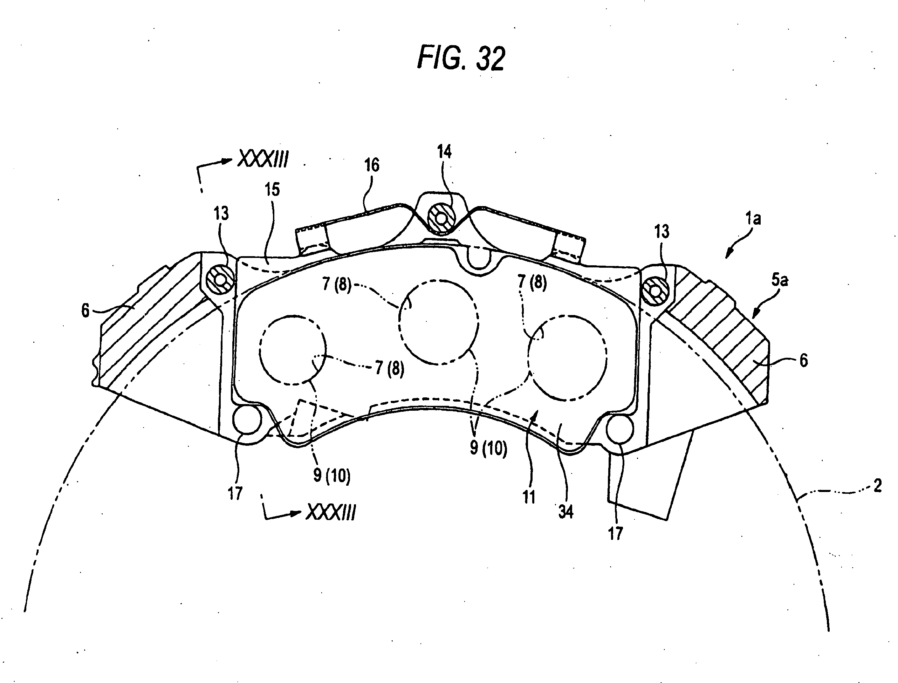

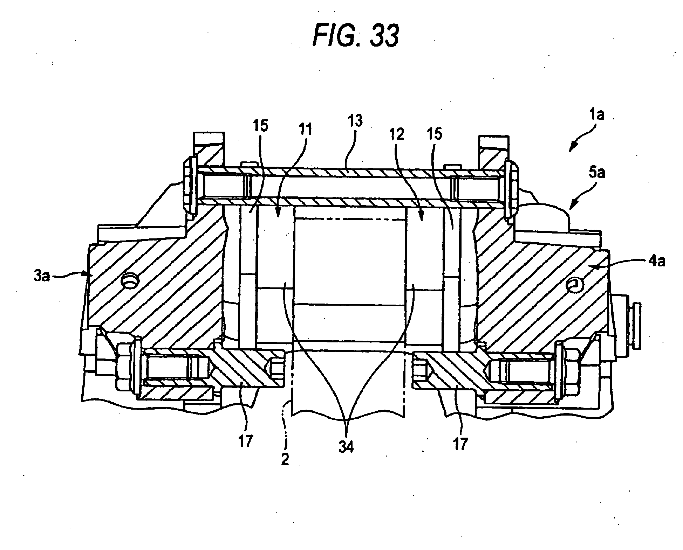

Further, also a further specific disc brake 1a shown in Figs.30 through 33 is provided with a caliper 5a arranged in a state of riding over the rotor 2. The caliper 5a is integrally produced by a material of an aluminum alloy and is provided with an outer body portion 3a and an inner body portion 4a arranged on both sides in an axial direction (head and tail direction of Figs.30 and 32, up and down direction of Fig.31, left and right direction of Fig.33) of the rotor 2, and a pair of connecting portions 6, 6 for connecting both end portions in a peripheral direction (left and right direction of Figs.30 through 32) of the outer and inner body portions 3a, 4a. Further, in a case of an illustrated example, the outer and inner body portions 3a, 4a are respectively provided with three pieces of, a total of six pieces of respective outer and inner cylinders 7, 7 (8, 8), and respective outer and inner pistons 9, 9 (10, 10) are fitted to mount to the respective cylinders 7, 7 (8, 8). Further, there is constructed a constitution of carrying out braking by pressing two outer and inner pads 11, 12 supported by the outer and inner body portions 3a, 4a by interposing the rotor 2 to the rotor 2 by the respective pistons 9, 9 (10, 10) .

A pair of outer side coupling pins 13, 13 and one piece of a middle coupling pin 14 are provided between outer end portions in a radial direction of portions of middle portions in peripheral directions of the outer body portion 3a and the inner body portion 4a disposed between the two connecting portions 6, 6 respectively in a state of bridging the outer and inner body portions 3a, 4a. In the respective coupling pins 13, 14, the two outer side coupling pins 13, 13 are provided at portions proximate to an outer side in the radial direction of an outer peripheral edge of the rotor 2 at positions of interposing pressure plates 15, 15 of the two outer and inner pads 11, 12 fromboth sides in the peripheral direction. Further, the middle coupling pin 14 is provided at a portion on outer sides in the radial direction of the two pads 11, 12 and between the two outer side coupling pins 13, 13. The respective coupling pins 13, 14 serve to hamper an interval between the outer body portion 3a and the inner body portion 4a from being deformed in a direction of being expanded by a reaction force in being pressurized for braking.

Further, the two outer side coupling pins 13, 13 are brought into contact with or opposed to be proximate to two end edges in the peripheral direction of the pressure plates 15, 15 constituting the two outer and inner pads 11, 12. In contrast thereto, a pad clip 16 is provided between the remaining middle coupling pin 14 and outer peripherals edges in the radial direction of the pressure plates 15, 15 of the two pads 11, 12 to exert an elastic force directed to inner sides in a radial direction and an elastic force in a direction of separating from each other to the two pressure plates 15, 15.

Further, two pieces of locking pins 17, 17 which are independent for the respective outer and inner body portions 3a, 4a are provided at the respective outer and inner body portions 3a, 4a at portions of the outer body portion 3a and the inner body portion 4a proximate to inner sides in the radial direction. The respective locking pins 17, 17 are respectively fixed to inner end portions in the radial direction of the outer and inner body portions 3a, 4a at positions of being proximate to two end portions in the peripheral direction thereof. Under the state, inner end edges in the radial direction of the pressure plates 15, 15 of the two pads 11, 12 are pressed to outer peripheral faces of portions of the respective locking pins 17, 17 based on the elastic force of the pad clip 16. The respective locking pins 17, 17 prevent the two pads 11, 12 from being drawn out from the caliper 5a to an inner side in the radial direction of the rotor 2 and prevent the two pads 11, 12 from being rattled in non braking time.

In braking by the opposedpiston type disc brake constituted as described above, the pressurized oil is fed to the respective outer cylinders 7, 7 and the respective inner cylinders 8, 8. Further, the two outer and inner pads 11, 12 are pressed to the two side faces of the rotor 2 by extracting the outer pistons 9, 9 and the inner pistons 10, 10. As a result, braking is carried out by friction between linings 34, 34 constituting the two pads 11, 12 and two side faces of the rotor 2. Further, a brake torque supplied to the two pads 11, 12 based on the friction is supported by the outer side coupling pin 13 on an anchor side of the two outer side coupling pins 13, 13 (a run-out side of rotation).

In braking carried out as described above, the outer and inner body portions 3a, 4a are exerted with forces in directions of being separated from each other as reaction forces in accordance with pressing the two pads 11, 12 to the rotor 2 by the respective pistons 9, 10. The two outer side coupling pins 13, 13 and the middle coupling pin 14 are respectively opposed to the forces to prevent the interval between the outer and inner body portions 3a, 4a from being expanded. Therefore, even when the body portions 3a, 4a are exerted with forces in directions of being separated from each other in rapid braking, the stable braking force can be ensured by ensuring a rigidity of the caliper 5a.

In the above-described case of the disc brake 1a of the opposed piston type of the background art shown in Figs.30 through 33, in order to prevent the interval between the outer and inner body portions 3a, 4a from being expanded regardless of the forces applied in braking, the outer and inner body portions 3a, 4a are coupled at middle portions in the rotational direction of the rotor 2 by the middle coupling pin 14. The coupling operation is carried out by screwing to further fasten screws 19, 19 inserted through the outer and inner body portions 3a, 4a to screw holes 18, 18 formed at both end portions of the middle coupling pin 14.

Therefore, when a length of the middle coupling pin 14 and a distance between outer side faces of middle portions of the outer and inner body portions 3a, 4a do not coincide with each other, there is a possibility of deforming the outer and inner body portions 3a, 4a. Specifically, when the length of the middle coupling pin 14 is smaller than the distance between the outer side faces, the outer and inner body portions 3a, 4a are deformed in direction in which the two outer side faces are proximate to each other in accordance with fastening the two screws 19, 19. In contrast thereto, when the length of the middle coupling pin 14 is larger than the distance between the two outer side faces, even in a state of fastening up the two screws 19, 19, there is brought about a state in which inner side faces of head portions of the two screws and outer side faces of middle portions of the outer and inner body portions 3a, 4a are not brought into contact with each other. When forces in directions of being separated from each other are applied between the outer and inner body portions 3a, 4a in accordance with rapid braking from the state, the outer and inner body portions 3a, 4a are deformed in directions in which the distance between the middle portions of the outer and inner body portions 3a, 4a is expanded. Although in either of the cases, deformation of the outer and inner body portions 3a, 4a is limited and does not effect an influence on the braking force, vibration or strange sound referred to as squeaking is liable to be brought about in braking, and therefore, the cases are not preferable.

In addition, the first example of the background art structure is constituted such that the two pads 11, 12 are held at the outer and inner body portions 3a, 4a (prevented from being detached to an inner side in a radial direction of the rotor 2) by the respective locking pins 17, 17 to support a brake torque applied to the two pads 11, 12 by the pair of outer side coupling pins 13, 13. Therefore, a necessary number of pieces of the pins 13, 17 is increased, all of part fabrication, part control, integrating operation become complicated, not only fabrication cost is increased, but also a weight thereof is increased.

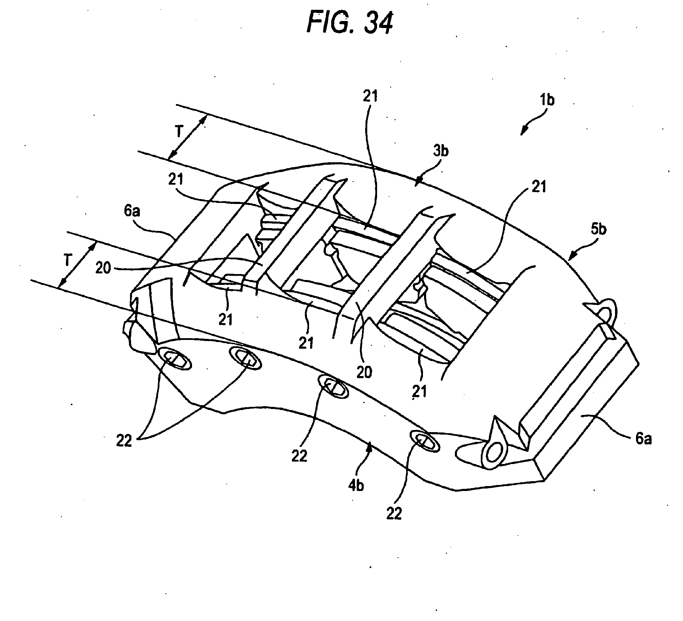

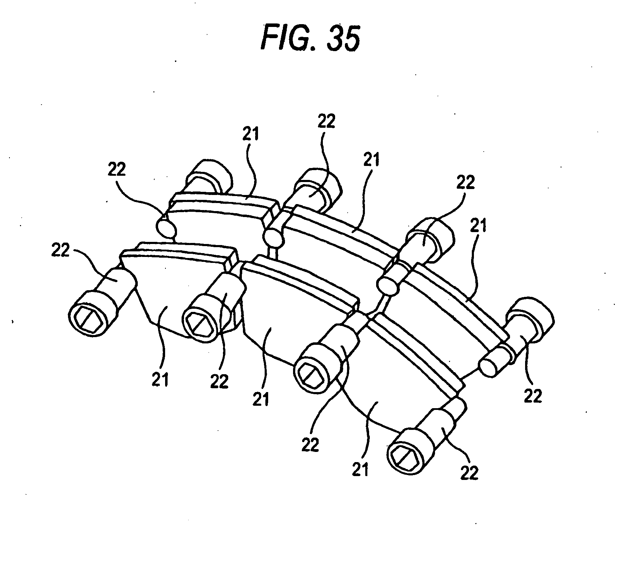

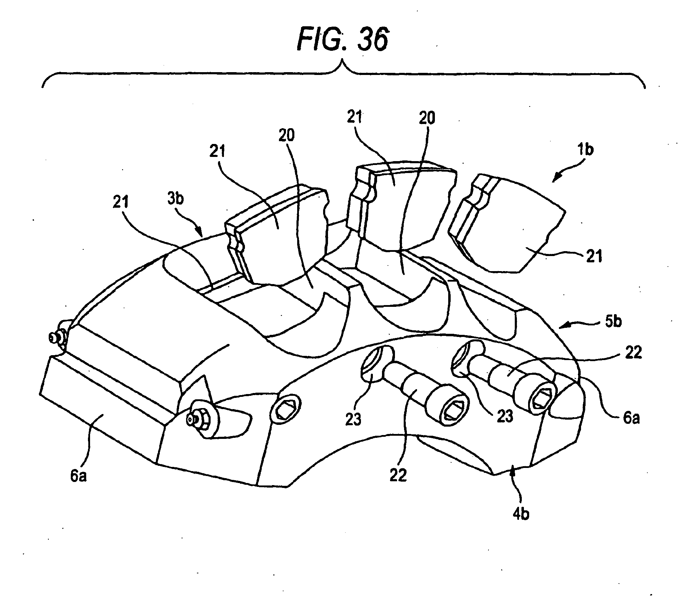

With regard to such problems, as described in Patent Reference 10, it is conceivable to adopt a structure of a disc brake 1b shown in Figs. 34 through 36. A caliper 5b constituting the disk brake 1b of a third example of the background art structures connects an inner body portion 3b and an outer body portion 4b by bridge portions 20, 20 integral with the outer and inner body portions 3b, 4b. Specifically, a pair of the bridge portions 20, 20 are made to bridge middle portions of the outer and inner body portions 3b, 4b and a portion between the outer and inner body portions 3b, 4b are divided by 3 along with connecting portions 6a, 6a at both end portions in a rotational direction of the rotor. Further, three sheets, a total of six sheets of pads 21, 21 are held by the outer and inner body portions 3b, 4b displaceably in an axial direction of the rotor by holding pins 22, 22 inserted from outer sides of the outer and inner body portions 3b, 4b. The respective holding pins 22, 22 hold the respective pads 21, 21 to inner side face portions of the outer and inner body portions 3b, 4b so as not to be detached therefrom and support a brake torque applied to the respective pads 21, 21 in braking. According to the third example of the background art structure, deformation of the outer and inner body portions 3b, 4b can effectively be restrained.

A pair of bridge portions 18, 18 are made to bridge middle portions of an outer body portion 3b and an inner body portion 4b constituting a caliper 5b. Further, respective 3 sheets for respectives of the outer and inner body portions 3b, 4b, or a total of 6 sheets of pads 19, 19 are held by the outer and inner body portions 3b, 4b by holding pins 20, 20 inserted through the outer and inner body portions 3b, 4b from outer sides displaceably in an axial direction of the rotor. The respective holding pins 20, 20 hold the respective pads 19, 19 so as not detach to inner side face portions of the outer and inner body portions 3b, 4b and support a brake torque applied to the respective pads 20, 20 in braking.

However, in the case of the third example of the background art structure, it seems that it is difficult to achieve small-sized and light-weighted formation in view of a necessity of ensuring rigidities of supporting the respective holding pins 22, 22. The reason is that the brake torque applied to the respective pads 21, 21 is supported by front end portions of the respective holding pins 22, 22 fixedly supported by the outer and inner body portions 3b, 4b respectively in a cantilever style. Although a number of sheets of the respective pads 21, 21 is large, and a magnitude of the brake torque per one sheet is limited, in rapid braking, a considerably large torque is applied thereto. Therefore, in view of the necessity of ensuring the rigidities of supporting the holding pins 22, 22, it is necessary to ensure a length of fitting base end portions through middle portions of the respective pins 22, 22 and support holes 23, 23 provided at the outer and inner body portions 3b, 4b. Further, in order to ensure the fitting length, a thickness dimension T (refer to Fig.34) of the outer and inner body portions 3b, 4b in the axial direction of the rotor needs to be increased to hamper small-sized and light-weighted formation.

Particularly, when the caliper 5b is made of a light alloy of an aluminum alloy or the like, the thickness dimension T needs to be increased considerably to halve a significance of made by a light alloy (effect of light-weighted formation). That is, although thickness dimensions of portions of the outer and inner body portions 3b, 4b provided with outer cylinders and inner cylinders are obliged to be increased, it is preferable to reduce the thickness direction of the other portion to achieve light-weighted formation. In contrast thereto, in the above-described case of third example of the background art structure, it seems that it is difficult to achieve such a light-weighted formation. The caliper 5b constitutes a so-to-speak unsprung load, even a small increase in weight hampers promotion of running stability of an automobile centering on a ride quality, a running stability, and therefore, it is not preferable that it is difficult to achieve a light-weighted formation. Further, the respective pads 21, 21 divided in three in a circumferential direction are used, and therefore, when a caliper having the same size is used, in comparison with a case of a nondividing type pad, an area of the lining is narrowed, which is disadvantageous in view of ensuring the brake force.

Moreover, although a function of holding the pads and a function of supporting the brake torque are provided to the same pins, owing to the structure of dividing the pad by 3 in a circumferential direction on the inner side and the outer side, a number of pieces of the pins used is large. Further, front end portions of the respective holding pins 20, 20 and portions for supporting the brake torque applied to the respective pads 19, 19 are constituted by free ends which are not supported by any portions. In other words, the respective holding pins 20, 20 are constituted to be installed to the outer and inner body portions 3b, 4b in a cantilever style and support the brake torque at front end portions projected from the outer and inner body portions 3b, 4b. Therefore, it is difficult to ensure rigidities of the respective holding pins 20, 20 and it is difficult to support the large brake torque. In the case of the structure described in Patent Reference 10 mentioned above, friction areas of the respective pads 19, 19 are narrow, a maximum value of the brake torque to be supported is also limited, and therefore, although it seems that the brake torque can be supported even by the holding pins 20, 20 in the cantilever style, when the two inner and outer pads are constituted by single sheets in order to restrain the number of pieces of holding pins to be small and the brake torque applied to the respective pads are increased, it is difficult to support the brake torque by the holding pins in the cantilever style.

Patent Reference 11 discloses an opposed piston type disc brake for a motor bike that has a bridge member and a pair of pads disposed on each of the opposite sides of the rotor. The bridge member is provided as to support the torque received from the brake pads.

Patent Reference 12 discloses an opposed piston type disc brake that has a single opening to allow assembly and disassembly of the brake pads without interfering with the caliper body.

### SUMMARY OF THE INVENTION

Invention provides an opposed piston type disc brake which is capable of effectively restraining deformation of an outer body portion and an inner body portion, and which is easy to achieve light-weighted formation by making the two body portion thin-walled

Moreover, the invention provides a opposed piston type disc brake which is capable of reducing a number of pieces of pins and capable of supporting a large brake torque.

According to the invention, an opposed piston type disc brake is provided with a caliper, a plurality of cylinders, a plurality of pistons, two sheets of pads, a coupling member, a plurality of pad supporting portions, and a pair of torque receiving pins. The caliper integrates the outer and inner body portions provided by interposing a rotor rotated along with a wheel, and a pair of connecting portions for connecting both end portions of the outer and inner body portions in a rotational direction of the rotor at positions in a radial direction outward from an outer peripheral edge of the rotor.

The respective cylinders are provided to be opposed to each other at the outer and inner body portions.

The respective cylinders are fitted to be mounted into the respective cylinders in liquid tight and displaceably in an axial direction of the rotor.

The two pads are supported by the outer and inner body portions and displaceable in the axial direction of the rotor.

The coupling member is configured to bridge the outer and inner body portions at a portion of the rotor proximate to an outer side in the radial direction more than an outer peripheral edge of the rotor in a state of hampering the outer and inner body portions from being displaced in a direction of being separated from each other.

The pad supporting portions are configured to hamper the two pads from being displaced to inner sides in the radial direction.

The two torque receiving pins are provided at portions of being opposed to two end edges of the pressure plates constituting the two pads in the rotational direction of the rotor and portions proximate to outer sides in the radial direction more than the outer peripheral edge of the rotor in a state of being made to bridge the outer and inner body portions.

Particularly, the coupling member is a bridge portion provided integrally with the caliper at a single portion on a middle portion of the outer and inner body portions in the rotational direction.

In the opposed piston type disc brake of the invention, the pad supporting portions may be projected from inner side faces of the respective outer and inner body portions at portions inner in the radial direction more than the outer peripheral edge of the rotor, and the pad supporting portions may be configured to be engaged with the respective two pads so as to hamper the two pads from being displaced to inner sides in the radial direction.

The respective pad supporting portions may be engaged with the respective pressure plates of the two pads so as to be capable of supporting a brake torque applied to the two pads.

The respective pad supporting portions may comprise locking pins projected from the inner side faces of the respective outer and inner body portions at the portions inner in the radial direction more than the outer peripheral edge of the rotor.

The respective pad supporting portions may be configured by the torque receiving pins and recess portions provided on the respective pressure plates, the recess portions may be arranged on the end edges of pressure plates in the rotational direction at portions outer in the radial direction more than the outer peripheral edge of the rotor, and the respective torque receiving pins may be capable of entering into the recess portions,
a brake torque applied to the two pads may be capable of being supported by an engagement of depth end surfaces of the recess portions with outer peripheral surfaces of the respective torque receiving pins, and
an engagement of inner surfaces of the recess portions with the outer peripheral surfaces of the respective torque receiving pins may hamper the two pads from being displaced to inner sides in the radial direction.

The bridge portion is provided at a position deviated to one side from centers of the outer and inner body portions in the rotational direction,
at least one of the torque receiving pins on the other side in the rotating direction may be configured to be attachable and detachable, and
in a state of detaching the one of torque receiving pin on the other side, there may be present a gap between one of the connecting portions on the other side and the bridge portion so that the pads are capable of being drawn and inserted through the gap.

Both end portions of the two torque receiving pins may be engaged with the outer and inner body portions so as to be able to support a force exerted to the outer and inner body portions in the directions separating the outer and inner body portions from each other in braking.

According to the opposed piston type disc brake of the invention constituted as described above, there can be realized a structure capable of effectively restraining deformation of the outer body portion and the inner body portion and a structure easy to achieve light-weighted formation by thin-walled formation of the outer and inner body portions.

First, deformation of the outer and inner body portions can effectively be restrained by the bridge portion integral with the outer and inner body portions. Although in braking, there is applied a force in a direction of expanding the interval between the outer and inner body portions and floating up a bottom of the outer body portion between the outer and inner bodyportions inbraking, based on presence of the bridge portion, interval between the outer and inner bodyportions is not expanded, and deformation of the outer and inner body portions can effectively be restrained also in braking. Further, the bridge portion is provided integrally with the outer and inner body portions, and therefore, it can effectively be restrained that the outer and inner body portions are deformed in accordance with integration of the middle coupling pin 14.

Further, the thin-walled formation is easy to be achieved by constituting the single sheets of the respective outer and inner body portions and a total of two sheets of the pads and receiving brake torque applied to the outer and inner body portions in braking by the pair of torque receiving pins provided in the state of being made to bridge the outer and inner body portions respectively. That is, the two torque receiving pins are supported by the outer and inner body portions in a two support style, and therefore, even when lengths in the axial direction of portions of engaging both end portions of the two torque receiving pins and the outer and inner body portions are shortened, rigidities of supporting the two torque receiving pins can sufficiently be ensured. Therefore, thickness dimensions of the outer and inner body portions in the axial direction of the rotor are reduced except portions of providing the respective cylinders, the caliper including the outer and inner body portions is constituted by light-weighted formation to thereby facilitate to achieve to promote the function of running the automobile.

Further, single sheets of the pads are provided for the respective outer and inner body portions, and therefore, the braking force is made to be easy to ensure by widening friction areas of linings of the two pads.

Further, as the plurality of pad supporting portions for hampering the two pads from being displaced to inner sides in the radial direction, the structure of the second aspect or the structure of the fifth aspect may be adopted. When the structure of the second aspect is adopted and the locking pins are used as the pad supporting portions based on the fourth aspect, the pad supporting portions can be easy manufactured and it becomes easy to manufacture the opposed piston type disc brake in a low cost.

When a part of the brake torque applied to the two pads is supported by the plurality of pad supporting portions, a maximum value of the brake torque supported by the torque receiving pins in braking can be restrained. Therefore, an outer diameter of the torque receiving pin can be reduced, and further light-weighted formation is easy to be achieved for a total of the opposed piston type disc brake.

By providing pairs of recess portions on the both end portions of the respective pressure plates, the brake torque applied to the pressure plates can be supported, and the pad supporting portions can be structured without the locking pins. Thereby, it becomes more easy to reduce the cost of the opposed piston type disc brake.

When the bridge portion is deviated to one side and the torque receiving pin on other side is made to be attachable and detachable, the operation of attaching and detaching the two pads to and from the caliper is made to be able to carry out easily while ensuring a rigidity of coupling the outer and inner body portions by the bridge portion and achieving small-sized and light-weighted formation of the caliper (while staying to be in a state of coupling to fix the caliper to a suspension). That is, when the bridge portion is provided in a state of being considerably projected to the outer sides of the outer and inner body portions in the radial direction of the rotor, the operation of attaching and detaching the two pads can be carried out even when the bridge portion is provided at the center portion or the torque receiving pin is fixed. However, in this case, so far as the sectional area of the bridge portion is not increased, the coupling rigidity cannot be ensured, and the caliper becomes large-sized. Further, even when the bridge is not projected considerably, by detaching a caliper from the suspension, the operation of attaching and detaching the two pads can be carried out, however, the attaching and detaching operation becomes very troublesome. In contrast thereto, when the constitution described in the sixth aspect is adopted, the above-described operation and effect can be achieved.

Further, it is preferable that the direction of deviating the bridge portion is the direction of constituting the anchor side in braking in advancing state. The reason is that there is frequently a structure of increasing a force of pressing the two pads to the rotor on the anchor side more than a counter anchor side with an object of preventing uneven wear of the linings of the two pads and restraining vibration or strange sound generated in braking. When the pressing force on the anchor side is large, the more on the anchor side, the larger the force operated in the direction of expanding the interval between the outer and inner body portions. Hence, when the bridge portion is deviated to the anchor side, the outer and inner body portions are easy to be restrained effectively from being deformed.

When the force in the direction of separating the outer and inner body portions from each other applied to the outer and inner body portions is made to be able to be supported by the two torque receiving pins, the caliper can further be light-weighted by reducing the sectional area of the bridge portion by reducing the force to be supported by the bridge portion in braking. Further, the two torque receiving pins are present at vicinities of connecting portions for connecting end portions of the outer and inner body portions to each other. Therefore, even when the two torque receiving pins are coupled to the outer and inner body portions to be able to support the force, in comparison with the bridge portion, the function for preventing the interval between the outer and inner body portions from being expanded is low. However, the two torque receiving pins are inherently needed, a weight thereof is hardly increased and a structure thereof is hardly complicated in accordance with coupling the outer and inner body portions to be able to support the force. Therefore, it is preferable to achieve light-weighted formation of the caliper by reducing the sectional area of the bridge even by small amount by adopting the constitution of the seventh aspect.

In accordance with the present invention, an opposed piston type disc brake is provided with a caliper, a plurality of cylinders, a plurality of pistons, two pads, a pad supporting portion, and a torque supporting portion.

The caliper is integrated with two outer and inner body portions provided by interposing a rotor rotated along with a wheel, and a pair of connecting portions for connecting both end portions of the outer and inner body portions in a rotational direction of the rotor at positions on outer in the radial direction than an outer peripheral edge of the rotor. Pad holding portions are structured by portions of side faces of the outer and inner body portions opposed to each other between the two connecting portions.

The respective cylinders are provided (singles through pluralities for respective outer and inner body portions) to be opposed to each other.

The respective pistons are fitted to be mounted into the respective cylinders in liquid tight and displaceably in an axial direction of the rotor. Further, the two pads are supported by the pad holding portions of the outer and inner body portions displaceably in the axial direction of the rotor and provided by respective single sheets, or a total of two sheets of the respective outer and inner body portions.

The pad supporting portion holds the two pads at the pad holding portions of the two outer and inner body portions by hampering the two pads from being displaced in a radial direction of the rotor.

The torque supporting portion transmits a brake torque applied to the two pads in braking to the caliper by way of pressure plates constituting the two pads to be supported by the caliper.

The torque supporting portion and the pad supporting portion are constituted by a pair of coupling pins, and a pair of recess portions provided at the respective pressure plates constituting the two pads.

The pair of coupling pins are made to bridge both end portions of the pad holding portions of the outer and inner body portions in a rotational direction of the rotor at positions outer in the radial direction than an outer peripheral edge of the rotor.

The respective recess portions are formed at two end edge portions of the pressure plates in the rotational direction of the rotor at positions outer in the radial direction than the outer peripheral edge of the rotor and pairs thereof are provided for the respective pressure plates.

Further, a function as the torque supporting portion is provided based on an engagement between depth end faces of the respective recess portions and outer peripheral faces of the coupling pins, and a function as the pad supporting portion is provided based on an engagement between the outer peripheral faces of the two coupling pins and two inner side faces of the respective recess portions.

Further, a bridge portion may be made to bridge portions proximate to outer side in the radial direction of the outer peripheral edge of the rotor between two outer and inner body portions. Further, by the bridge portion, the outer and inner body portions are hampered from being displaced in directions of separating from each other. The bridge portion may be provided integrally with the caliper only at a single portion on a middle portion of the outer and inner body portions in the rotational direction and deviated to one side from centers of the outer and inner bodyportions in the rotational direction of the rotor. Further, at least the coupling pin on the other side in the rotating direction of the two coupling pins may be attachable and detachable, and in a state of detaching the coupling pin on the other side, there is present a gap capable of drawing and inserting the two pads between the connecting portion on the other side of the two connecting portions and the bridge portion.

There can be realized a structure restraining a number of pieces of the pins to be small and capable of supporting a large brake torque.

That is, by engaging the pair of coupling pins and two end edges of the pair of pressure plates constituting the pair of pads, the two pads are supported by the pad holding portions, at the same time, the brake torque applied to the two pads in braking are supported by the caliper. The two coupling pins support two end portions by the caliper, and therefore, can support a large brake torque by ensuring a sufficient support rigidity.

Further, there can be realized a structure of effectively restraining the outer body portion and the inner body portion from being deformed and a structure easy to achieve light-weighted formation by thin-walled formation of the outer and inner body portions. That is, although in braking, a force in a direction of expanding an interval between the outer and inner body portions is applied between the outer and inner body portions, based on presence of the bridge portion, the interval between the outer and inner body portions is not expanded, and the outer and inner body portions can effectively be restrained from being deformed also in braking. Further, the bridge portion is deviated to one side, the coupling pin on the other side is made to be attachable and detachable, and therefore, operations of attaching and detaching the two pads to and from the caliper are made to be easily carried out (in a state of coupling to fix the caliper to a suspension) while ensuring a rigidity of coupling the outer and inner body portions by the bridge portion and achieving small-sized and light-weighted formation of the caliper.

Further, it is preferable that a direction of deviating the bridge portion is constituted by a direction constituting an anchor side in braking in an advancing state. The reason is that there is frequently a structure of increasing a force of pressing the two pads to the rotor on the anchor side than on a counter anchor side with an object of preventing uneven wear of linings of the two pads and restraining a vibration or a strange sound generated in braking. When a press force on the anchor side is large, the force operated in the direction of expanding the interval between the outer and inner body portions is increased on the anchor side. Hence, when the bridge portion is deviated to the anchor side, it is easy to effectively restrain the outer and inner body portions from being deformed against the force.

Other aspects and advantages of the invention will be apparent from the following description and the appended claims.

### BRIEF DESCRIPTION OF THE DRAWINGS

Fig.1 is a perspective view showing an exemplary embodiment of the invention.
Fig. 2 is a front view showing the exemplary embodiment from an outer side.
Fig. 3 is a front view showing the exemplary embodiment from an inner side.
Fig.4 is a plane view showing from an outer side in a radial direction constituting an upper side of Fig.3.
Fig.5 is a view showing from a right side of Fig.3.
Fig.6 is a sectional view taken along a line VI-VI of Fig .1.
Fig.7 is a view showing from a direction the same as that of Fig.2 by only taking out a caliper.
Fig.8 is a view showing from an outer side in a radial direction constituting an upper side of Fig.7.
Fig.9 is a view showing from an inner side in the radial direction constituting a lower side of Fig.7.
Figs. 10 (A) and 10(B) illustrate end face views and side face views showing two examples of an outer side coupling pin.
Fig.11 is a view shown in a state of being viewed from a direction the same as that of Fig. 6 in a state of overlapping a procedure of attaching and detaching a pad to and from the caliper in one sheet of a view.
Figs. 12(A) to 12(G) are views showing an order of steps of assembling the pads to a caliper.
Fig.13 is a sectional view showing a further exemplary embodiment of the invention, corresponding to a right side of Fig.6.
Fig. 14 is a perspective view of a further exemplary embodiment of the invention.
Fig.15 is a plane view of the further exemplary embodiment shown from outside in a radial direction.
Fig. 16 is a cross sectional view taken along a line XVI-XVI of Fig. 15.
Figs. 17(A) to 17(H) are views showing an order of steps of assembling the pads to a caliper.
Fig.18 is a perspective view showing an embodiment not falling under the invention as described in the claims. This embodiment illustrates features of the inventive embodiment shown in Figures 27 and 28.
Fig.19 is a front view viewed from an outer side of an embodiment not falling under the invention as described in the claims. This embodiment illustrates features of the inventive embodiment shown in Figures 27 and 28.
Fig.20 is a plane view viewed from an outer side in a radial direction constituting an upper side of Fig. 19.
Fig.21 is a sectional view taken along a line XXI-XXI of Fig.20.
Figs. 22 (A) and 22 (B) illustrate end face views and side views showing two examples of an outer side coupling pin.
Figs. 23 (A) and 23 (B) illustrate views viewed respectively from a surface side in Fig. 23 (A) and a rear face side in Fig. 23(B) by taking out only a pad.
Figs. 24 (A) and 24 (B) illustrate views enlarging portion B of Fig.23 (B) showing two examples of a shape of a recess portion for engaging a middle portion of an outer side coupling pin.
Fig.25 is a perspective view showing a first example of a pad clip.
Fig.26 is a perspective view showing a second example of the pad clip.
Fig.27 is a view showing a further exemplary embodiment of the invention in a state of being viewed from an inner side.
Fig.28 is a sectional view of the fifth exemplary embodiment.
Fig.29 is a perspective view showing a first example of a disc brake which is known in a background art.
Fig. 30 is a view showing a second example of the background art.
Fig.31 is a view shown from an outer side in a radial direction constituting an upper side of Fig.30.
Fig.32 is a sectional view taken along a line XXXII-XXXII of Fig.31.
Fig. 33 is a sectional view taken along a line XXXIII-XXXIII of Fig.32.
Fig.34 is a perspective view showing a third example of the background art.
Fig.35 is a perspective view shown in a state of taking out respective pads and locking pins in the third example of the background art.
Fig.36 is a perspective view showing a state of attaching and detaching the pad in the third example of the background art.

### DETAILED DESCRIPTION OF THE EXEMPLARY EMBODIMENTS

### <First Exemplary Embodiment>

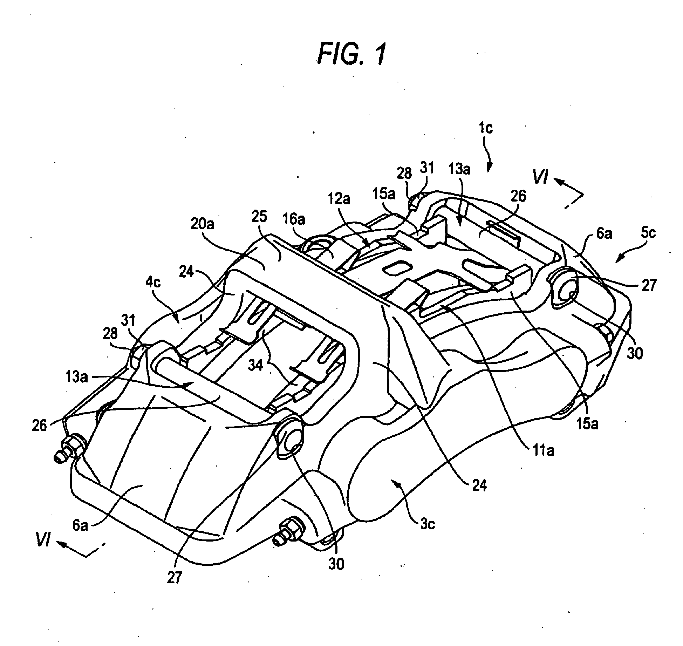

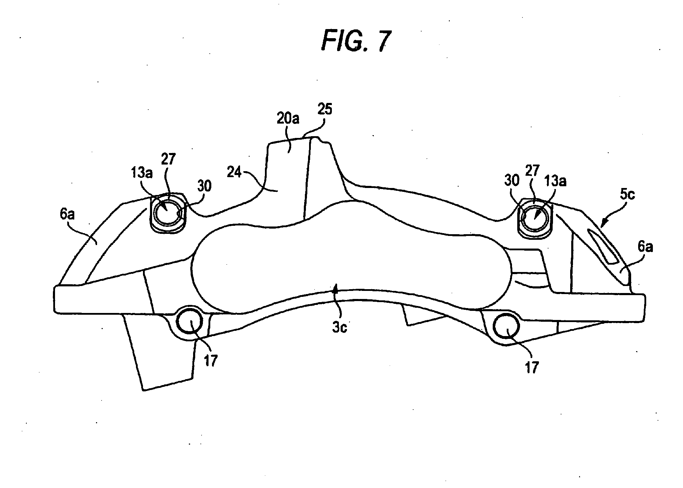

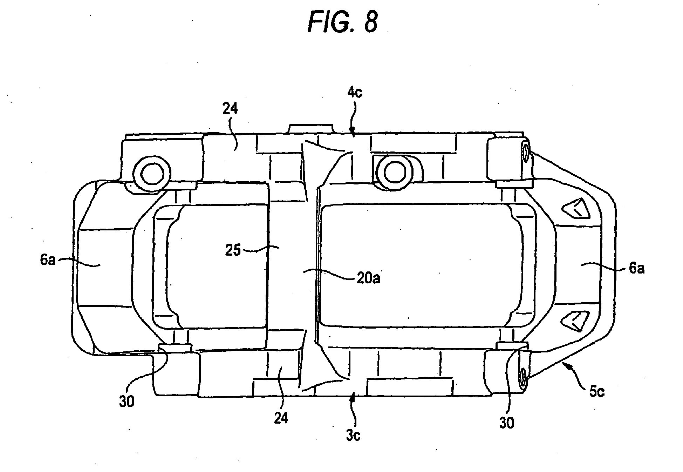

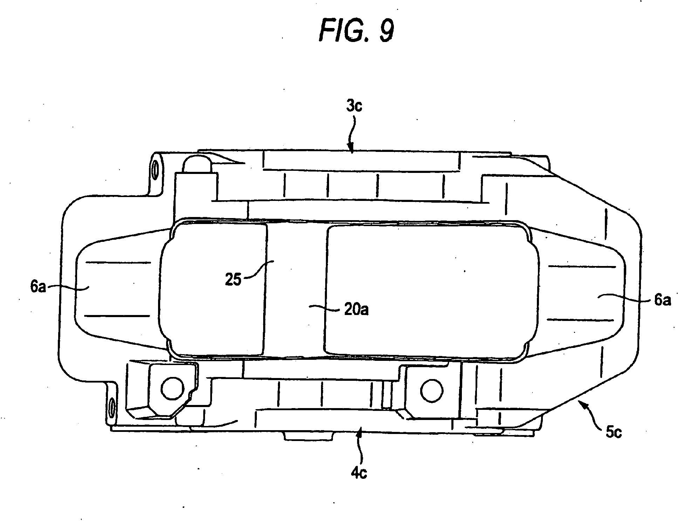

Figs.1 through 12(G) show an exemplary embodiment of the invention. In a disc brake 1c of the first exemplary embodiment, a bridge portion 20a is made to bridge an outer body portion 3c and an inner body portion 4c at a position of one portion of an outer peripheral face of a middle portion of a caliper 5c. A pair of outer side coupling pin 13a, 13a respectively constituting torque receiving pins are attached to the caliper 5c. Constitution and operation of other portion are similar to those of the second example of the background art structure shown in Figs. 30 through 33, a detailed explanation is given to the constitution of the second example of the background art structure in Patent Reference 8 mentioned above. Therefore, an explanation of a constitution similar to that of the second example of the background art structure will be omitted or simplified and an explanation will be given centering on a characteristic portion of the first exemplary embodiment as follows.

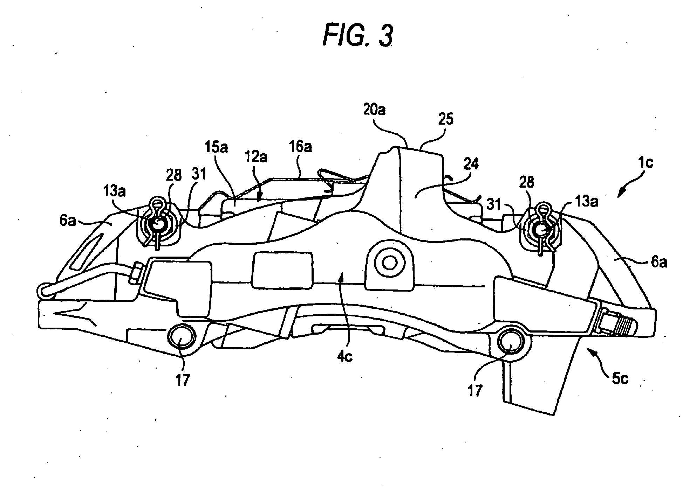

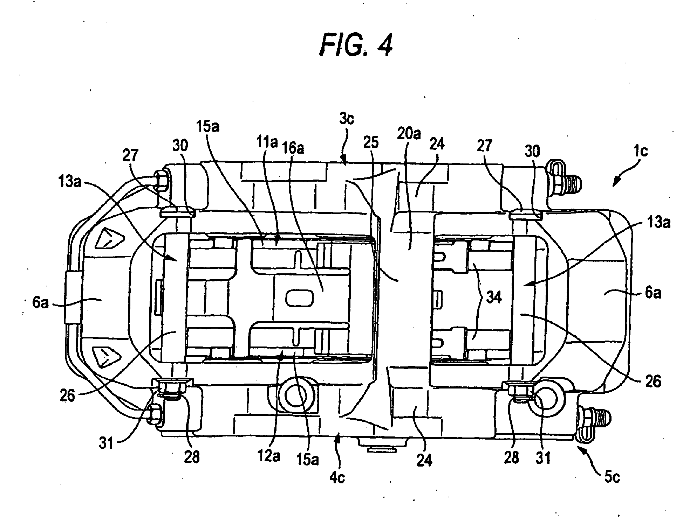

The caliper 5c constituting the disc brake 1c of the first exemplary embodiment is integrally produced by subjecting an aluminum alloy to diecast forming, and is provided with the outer body portion 3c and the inner body portion 4c and a pair of connecting portions 6a, 6a connecting both end portions of the outer and inner body portions 3c, 4c in a rotational direction of the rotor 2. Further, in the case of the first exemplary embodiment, the bridge portion 20a is made to bridge the outer and inner body portions 3c, 4c. The bridge portion 20a is constituted by a gate shape comprising a pair of leg portions 24, 24 and a connecting portion 25 for connecting front end portions of the two leg portions 24, 24. The bridge portion 20a is integrally provided to the outer and inner body portions 3c, 4c by making base end portions of the two leg portions 24, 24 continuous to outer peripheral faces of the outer and inner body portions 3c, 4c. In the case of the example, the bridge portion 20a is provided in a state of being deviated to an anchor side (left sides of Figs.1, 2, 6 through 9, 11, right sides of Figs. 3, 4) inbrakinginadvancingstate. Further, although the outer and inner body portions 3c, 4c are provided with pairs of cylinders by being divided respectively to the anchor side and a counter anchor side, an inner diameter of the respective cylinders on the anchor side is made to be larger than an inner diameter of the cylinders on the counter anchor side. By the constitution, a force for pressing an outer pad 11a and an inner pad 12a to side faces of the rotor 2 is made to be larger on the anchor side than on the counter anchor side.

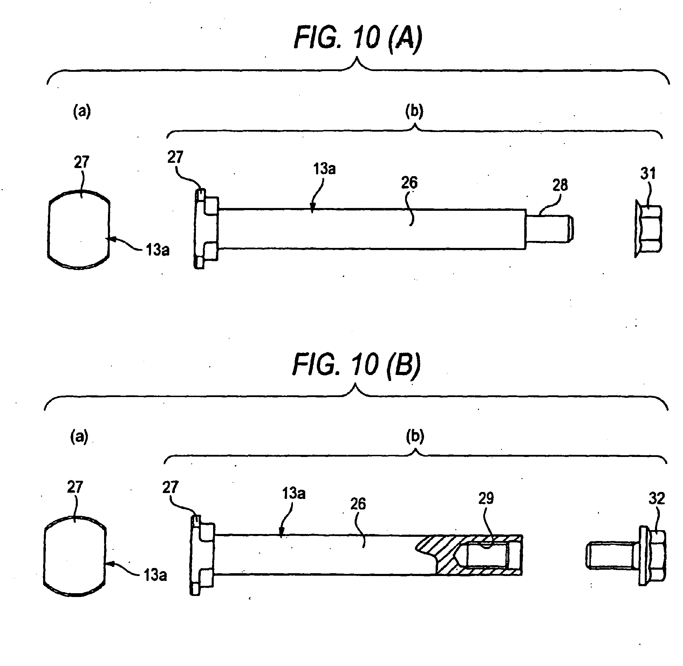

Further, the two outer side coupling pins 13a, 13a are attachably and detachably provided to portions of both ends of the outer and inner body portions 3c, 4c proximate to outer ends of the outer and inner body portions 3c, 4c in a radial direction and at portions thereof proximate to the two connecting portions 6a, 6a. The two outer side coupling pins 13a, 13a are formed by a shape as shown by Fig. 10(A) or Fig. 10(B) by a metal material having high Young's modulus (difficult to be deformed elastically and having a high rigidity against a force in a tensile direction) and excellent in wear resistance as in a ferrous alloy of stainless steel, bearing steel or the like. The outer side coupling pin 13a shown in Fig. 10 (A) is provided with a rod portion 26 having a section in a circular shape, a flange portion 27 in an oval shape of an outward directed flange shape fixedly provided to a base end portion of the rod portion 26, and a male screw portion 28 having a diameter smaller than that of the rod portion 26 formed concentrically with the rod portion 26 at a front end portion of the rod portion 26. Further, the outer side coupling pin 13a shown in Fig. 10 (B) is formed with a screw hole 29 opened at a center portion of a front end face of the rod portion 26 at a front end portion of the rod portion 26.

Even in a case of using the outer side coupling pin 13a having either of the structures, the rod portions 26 of the outer side coupling pins 13a are inserted to through holes formed at portions of the outer and inner body portions 3c, 4c proximate to both ends thereof and proximate to outer diameters thereof, and the flange portions 27 are engaged with engaging recess portions 30 formed at an outer side face of the outer body portion 3c. Under the state, rotation of the outer side coupling pin 13a is hampered, and therefore, a nut 31 is screwed to the male screw portion 28 formed at the front end portion of the outer side coupling pin 13a, or a bolt 32 is screwed to the screw hole 29. Further, portions of the outer and inner body portions 3c, 4c proximate to both ends of outer side faces thereof are suppressed between head portions of the nuts 31 or the bolts 32 and the flange portions 27. Further, the portions of the outer and inner body portions 3c, 4c proximate to the both ends are proximate to the two connecting portions 6a, 6a and are provided with high rigidities. Therefore, when a torque for fastening the nut 31 or the bolt 32 is properly restricted, deformation of the outer and inner body portions 3c, 4c in accordance with fastening the nuts 31 or the bolts 32 can be disregarded.

Further, in the rotational direction of the rotor 2, both end edges of pressure plates 15a, 15a constituting the outer pad 11a and the inner pad 12a are brought into contact with or proximate to be opposed to the two outer side coupling pins 13a, 13a. Further, in the radial direction of the rotor 2, both end portions of inner peripheral edges of the two pressure plates 15a, 15a are brought into contact with locking pins 17, 17 base half portions of which are respectively fixed to the outer and inner body portions 3c, 4c to prevent the two end portions from being detached from the outer and inner body portions 3c, 4c to the inner side in the radial direction of the rotor 2. Further, the two pressure plates 15a, 15a are elastically pressed to the respective locking pins 17, 17 by providing a pad clip 16a between outer peripheral edges of the two pressure plates 15a, 15a, a side face of an inner periphery of the bridge portion 20a and the outer side coupling pin 13a on the counter anchor side to thereby prevent the two pads 11a, 12a from being rattled in non braking time.

According to the opposed piston type disc brake 1c of the first exemplary embodiment constituted as described above, there can be realized a structure of effectively restraining deformation of the outer and inner body portions 3c, 4c and a structure easy to achieve light-weighted formation by thin-walled formation of the outer and inner body portions 3c, 4c. That is, respective middle portions of the outer and inner body portions 3c, 4c are coupled by the bridge portion 20a, and therefore, regardless of a force exerted between the outer and inner body portions 3c, 4c in braking, in a direction of expanding the interval between the outer and inner body portions 3c, 4c and floating up a bottom of the outer body portion 3c, the interval between the outer and inner bodyportions 3c, 4c is not expanded and deformation of the outer and inner body portions 3c, 4c can effectively be restrained also in braking. Further, the bridge portion 20a is provided integrally with the outer and inner body portions 3c, 4c, and therefore, it can effectively be restrained that the outer and inner body portions 3c, 4c are deformed in accordance with integration of the middle coupling pin 14.

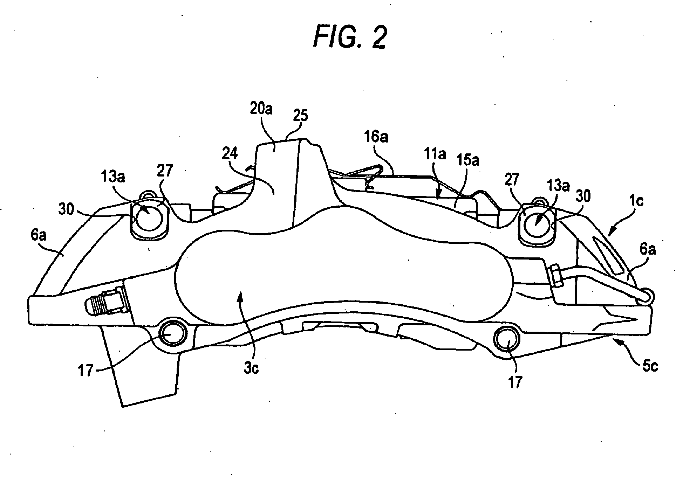

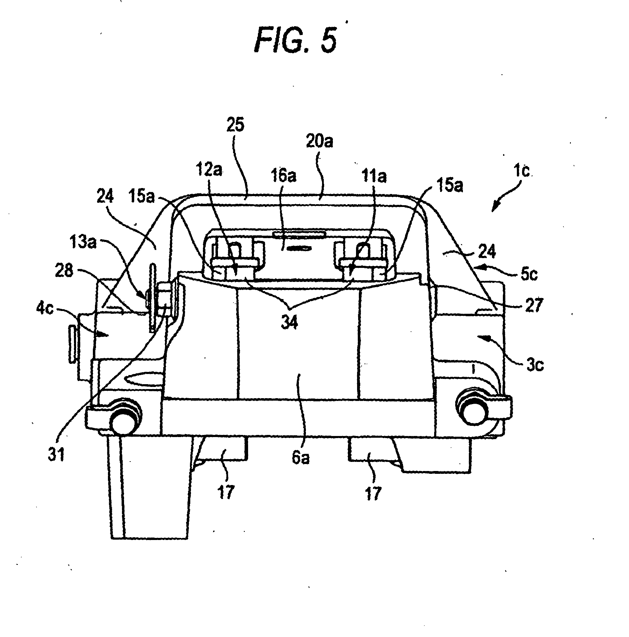

Further, a brake torque applied to the two pads 11a, 12a is supported by the outer side coupling pin 13a of one of the two outer side coupling pins 13a, 13a (left sides of Figs.1, 2, right sides of Figs.3, 4 in advancing). Both of the two outer side coupling pins 13a, 13a are supported by the outer and inner body portions 3c, 4c in a both supporting style, and therefore, even when lengths in the axial directions of the portion of engaging the two end portions of the two outer side coupling pins 13a, 13a and the outer and inner body portions 3c, 4c are shortened, rigidities of supporting the two outer side coupling pins 13a, 13a can sufficiently be ensured. Therefore, as is apparent from Fig.1, thickness dimensions of the outer and inner body portions 3c, 4c in the axial direction of the rotor 2 (up and down directions of Figs.4, 8, 9, left and right direction of Fig.5) can be reduced except portion thereof providing the respective cylinders. As a result, it is easy to achieve to promote a function of running an automobile by constituting the caliper 5c including the outer and inner body portions 3c, 4c by light-weighted formation.

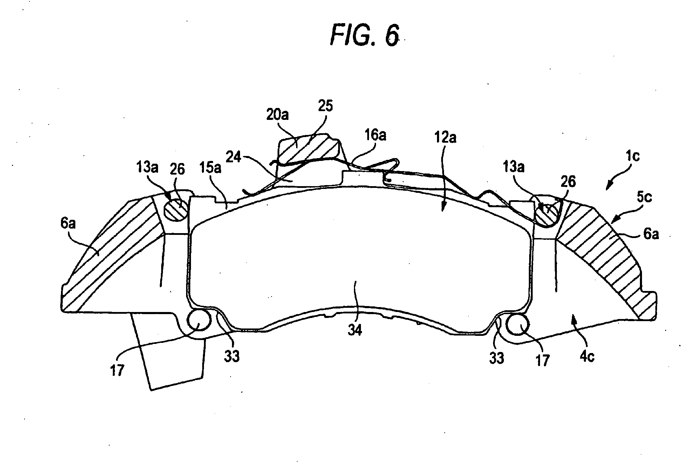

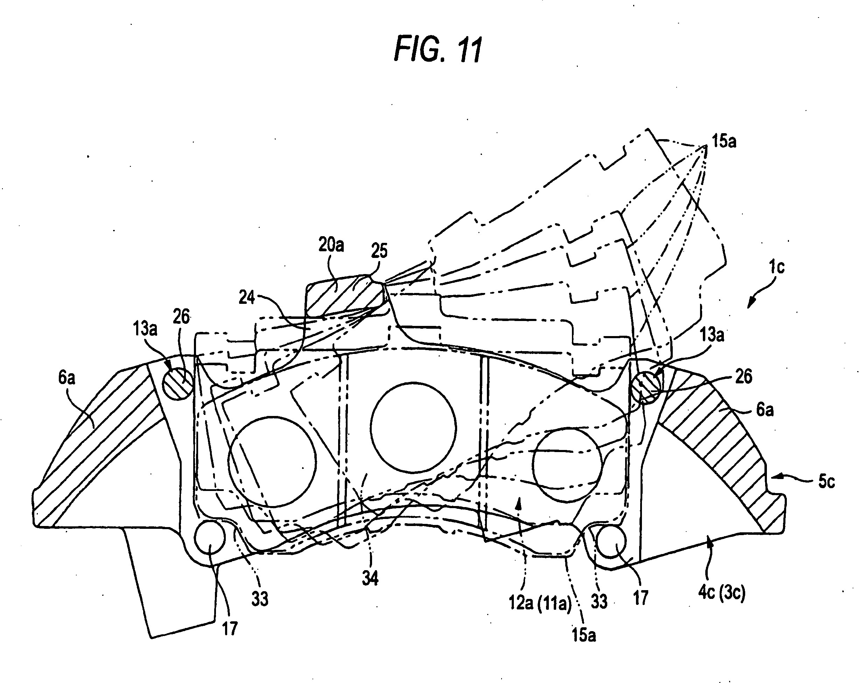

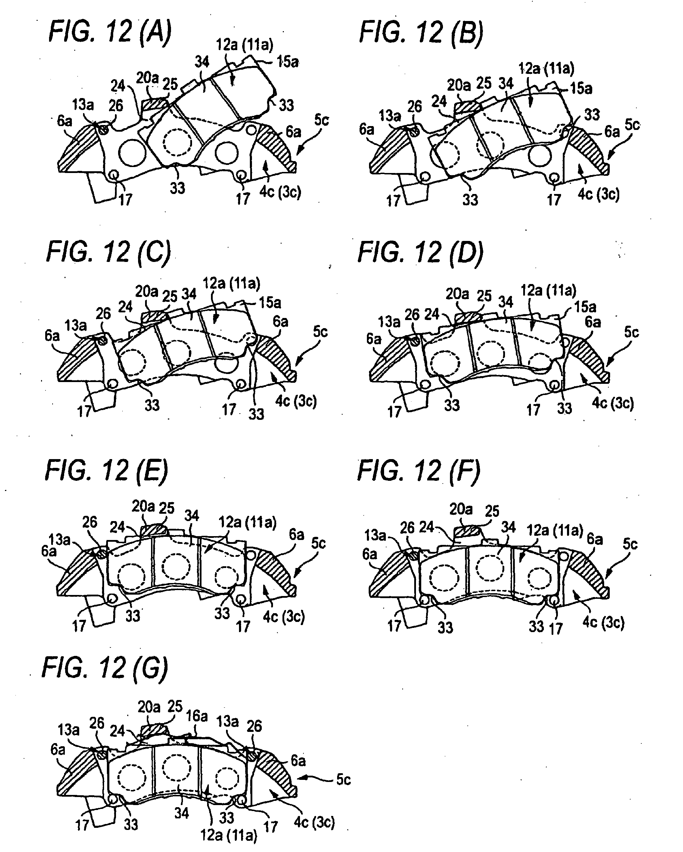

Further, in the case of the exemplary embodiment, the bridge portion 20a is deviated to the anchor side, the outer side coupling pin 13a on the counter anchor side is made to be attachable and detachable, and therefore, operation of attaching and detaching the two pads 11a, 12a to and from the caliper 5c can easily be carried out while ensuring rigidities of coupling the outer and inner body portions 3c, 4c and achieving small-sized and light-weighted formation of the caliper 5c. In the attaching and detaching operation, in a state of detaching the outer side coupling pin 13a on the counter anchor side, as respectively shown by chain lines in Fig.11 and shown in Figs. 12(A) to 12(G) Fig. 12 (A) ↔ Fig. 12 (B) ↔ Fig. 12 (C) ↔ Fig.12(D) ↔ Fig.12(E) ↔ Fig. 12(F) ↔ Fig.12(G)), the two pads 11a, 12a are drawn and inserted between the pair of connecting portions 6a, 6b through a gap between the bridge portion 20a and the counter anchor side connecting portion 6a. In a state of integrating the two pads 11a, 12a between the two connecting portions 6a, 6b, as shown by Fig.6 and Fig.12(G)), the outer side coupling pin 13a on the counter anchor side is made to bridge the outer and inner body portions 3c, 4c and the pad clip 16a is mounted.

Further, in the case of the exemplary embodiment, a force applied to the outer and inner body portions 3c, 4c in a direction of being separated from each other is made to be able to be supported by the two outer side coupling pins 13a, 13a, and therefore, a force to be supported by the bridge portion 20a in braking can be alleviated. Further, the caliper 5c can further be constituted by light-weighted formation by reducing a sectional area of the bridge portion 20a.

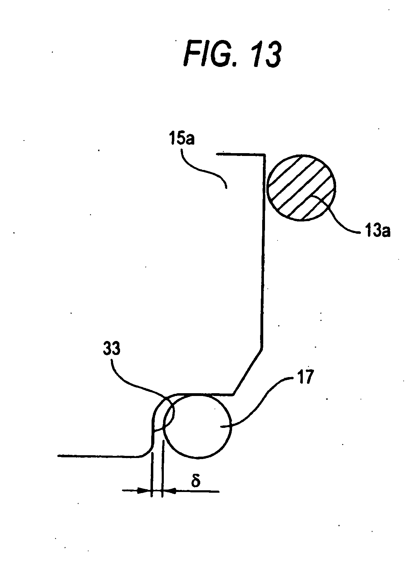

Further, in the illustrated example, as shown by, for example, Fig. 6, outer peripheral faces of the respective locking pins 17, 17 and stepped difference portions 33, 33 formed at inner peripheral edge portions of the two pressure plates 15a, 15a are separated from each other, and therefore, the respective locking pins 17, 17 do not support the brake torque applied to the two pads 11a, 12a. However, a part of the brake torque can be made to be supportable by the respective locking pins 17, 17 by making the outer peripheral faces of the locking pins 17, 17 and the respective stepped difference portions 33, 33 opposedly proximate to each other. Also in this case, as shown in Fig.13, distances between the outer peripheral faces of the respective locking pins 17, 17 and the respective stepped difference portions 33, 33 are slightly made to be larger than distances between the outer peripherals faces of the two outer side coupling pins 13a, 13a and end edges of the pressure plates 15a, 15a in non braking time. Therefore, supporting the brake torque by the respective locking pins 17, 17 is limited to a case in which amounts of elastically deforming respective portions are increased in rapid braking or the like. The respective locking pins 17, 17 supported by the outer and inner body portions 3c, 4c respectively by a cantilever style do not constitute essential parts for supporting the brake torque, and it is not necessary to make rigidities of supporting the respective locking pins 17, 17 as large as those of the structure described in Patent Reference 10. Therefore, although the brake torque supported by the respective locking pins 17, 17 is limited, by restraining a maximum value of the brake torque supported by the two outer side coupling pins 13a, 13a, small diameter formation of the two outer side coupling pins 13a, 13a can be achieved.

Further, a pad supporting portion for preventing the two pads 11a, 12a from being detached from the outer and inner body portions 3c, 4c is not limited to the illustrated locking pins 17, 17 but various structures of a guide plate, locking projected portions integral with the outer and inner body portions 3c, 4c and the like can be adopted therefor. However, when the locking pins 17, 17 as illustrated are adopted, the above-described respective pad supporting portions can easily be constituted, and low cost formation of the opposed piston type disc brake is easy to be achieved.

Fig. 13 shows a further exemplary embodiment of the invention. In the second exemplary embodiment, a gap (δ) between an outer peripheral surface of the locking pin 17 in the rotational direction of the rotor and a stepped portion 33 formed on an inner peripheral edge of the pressure plate in the rotational direction of the rotor is set shorter than the gap in the first exemplary embodiment. Specifically, in a state of engaging an outer peripheral surface of the outer side coupling pin 13a with an edge of the pressure plate 15a without generating elastic deformations of the members, a position of the locking pin 17 is set to be closer to the edge of the pressure plate 15a so that the gap (δ) is approximately within 0.2mm to 1.0mm.

In this embodiment, due to the above structure, when a large brake torque is applied to the pads, such as in a sudden braking, the stepped portion 33 of the pressure plate 15a engages with the outer peripheral surface of the locking pin in accordance with the elastic deformations of the members. Thereby, a part of the brake torque applied to the pads are supported by the locking pins. As a result, it is possible to reduce a maximum brake torque applied to the outer side coupling pin 13a as the torque receiving pin during the braking. Therefore, a diameter of the outer side coupling pin can be set smaller, so that it becomes easier to realize a reduction of total weight of the opposed piston type disc brake, as a whole.

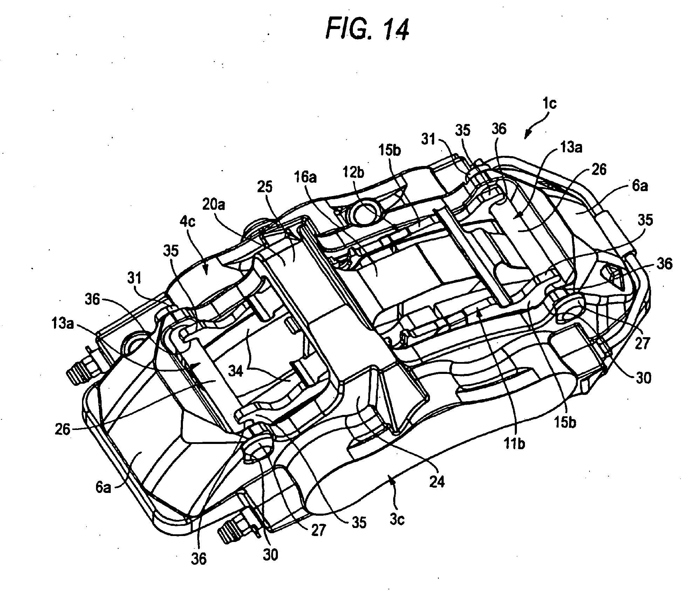

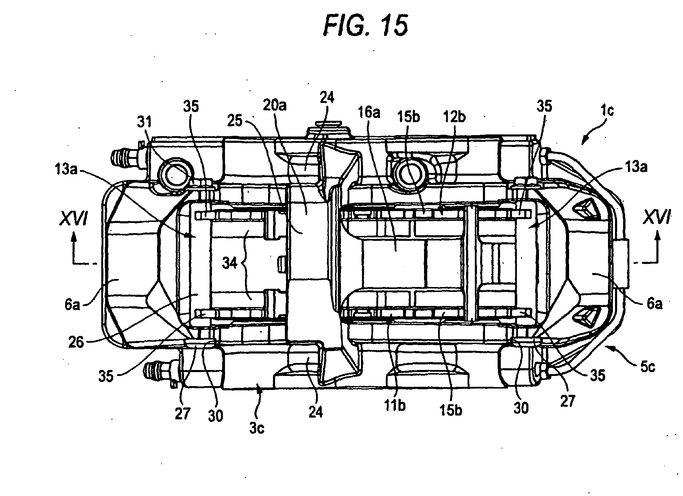

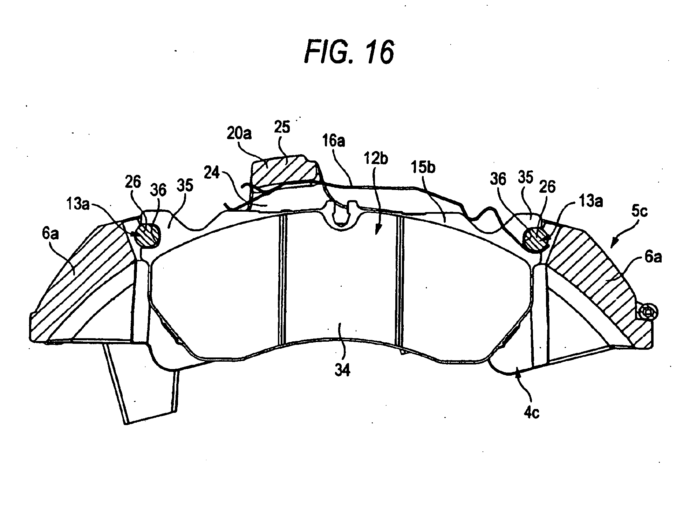

Figs. 14 to 17(H) show a further exemplary embodiment of the invention. In this exemplary embodiment, the pressure plate 15b of the each of the outer and inner pads 11b, 12b is formed with extension portions 35, 35 extending over the lining in the rotational direction and formed on both end portions of the pressure plate 15b in the rotational direction at portions outer in the radial direction than the outer peripheral edge of the rotor 2. Recess portions 36, 36 having notch-shape are formed on the extension portions 35, 35. The recess portions 36, 36 are opened toward the both end portions of the pressure plate 15b in the rotational direction. The recess portions 36, 36 have sizes so that respective middle portions of the outer side coupling pins 13a, 13a can be inserted into the recess portions 36, 36. That is, the respective recess portions 36, 36 have C-shapes or U-shapes, and have widths slightly larger than diameters of the middle portion of the outer side coupling pins 13a, 13a and depths larger than the half lengths of the diameters of the middle portion of the outer side coupling pins 13a, 13a.

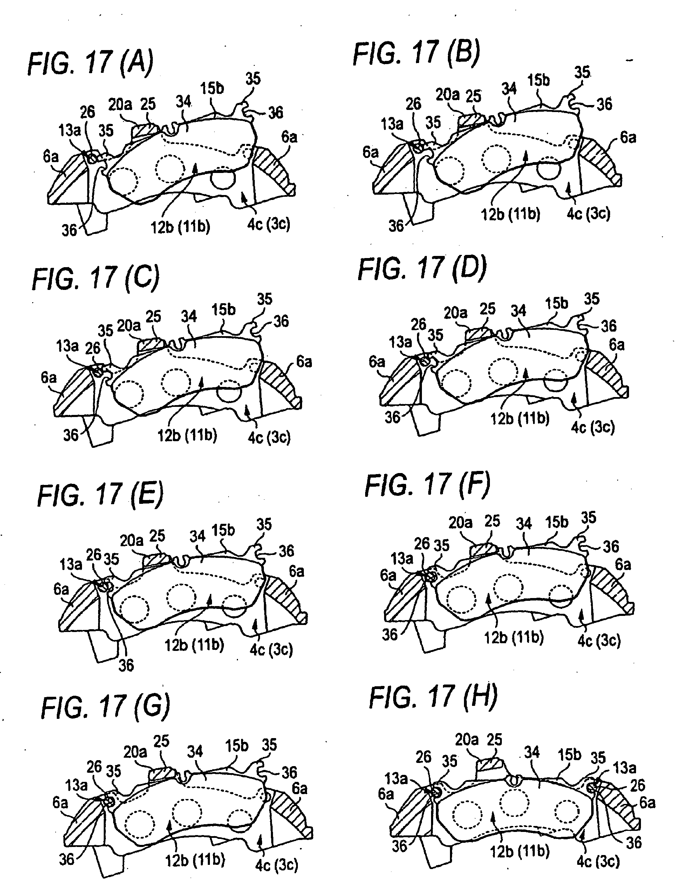

In order to support the pads 11b, 12b to the caliper 5c to the outer side coupling pins 13a, 13a, first, the outer coupling pin 13a in the anchor side in advancing (left side in Figs. 14 to 17(H)) is mounted to bridge between the outer and inner body portions 3c, 3c. Then, the recess portions 36, 36 in one sides of the pressure plates 15b, 15b of the pads 11b, 12b are engaged with the outer side coupling pin 13a in the anchor side. Thereafter, as shown in Fig.17(A) → Fig.17(B) - Fig.17(C) → Fig. 17 (D) → Fig.17(E) → Fig.17(F) → Fig. 17 (G) → Fig. 17 (H) , the pads 11b, 12b are rotated around the outer side coupling pin 13a so that the pads 11b, 12b are inserted between the outer and inner body portions 3c, 4c. Then, the other of the outer side coupling pins 13a (the outer side coupling pin 13a in the counter anchor side) is mounted to bridge between the outer and inner body portions 3c, 3c, while the outer side coupling pins 13a is engaged with the recess portions 36, 36 in the other sides of the pressure plates 15b, 15b of the pads 11b, 12b.

Thus, the pads 11b, 12b are supported to the caliper 5c so as to be displaceable in the axial direction of the rotor 2. In addition, by the engagement between the outer side coupling pins 13a, 13a and the recess portions 36, 36, the pads 11b, 12b are prevented from dropping out to inner and outer sides in the radial direction of the rotor 2. That is, the outer peripheral surfaces of the middle portions of the outer side coupling pins 13a, 13a and the respective inner surfaces of the recess portions 36, 36 are engaged or come close with each other, thereby the displacement of the pads 11b, 12b in the radial direction is prevented. An operation to detach the pads 11b, 12b from the caliper 5c can be carried out in a reverse step of the above attaching the pads 11b, 12b to the caliper 5c. Since structures and functions of the opposed piston type disc brake of the third exemplary embodiment are similar to the first exemplary embodiment, explanations overlapping with the first exemplary embodiment are omitted.

### <Fourth Exemplary Embodiment>

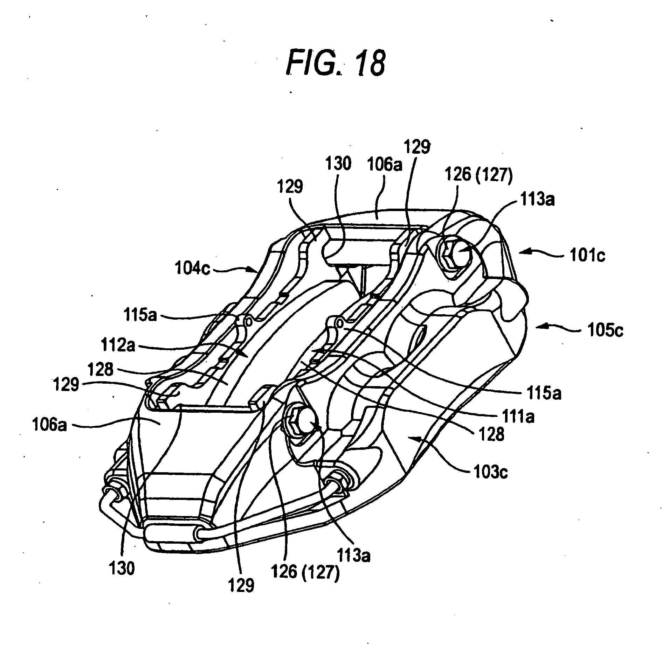

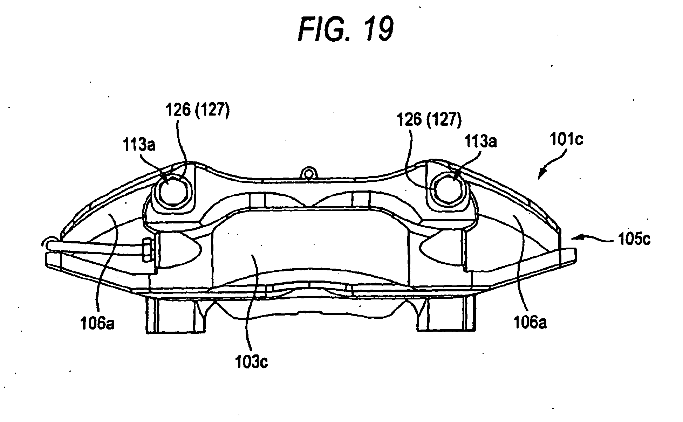

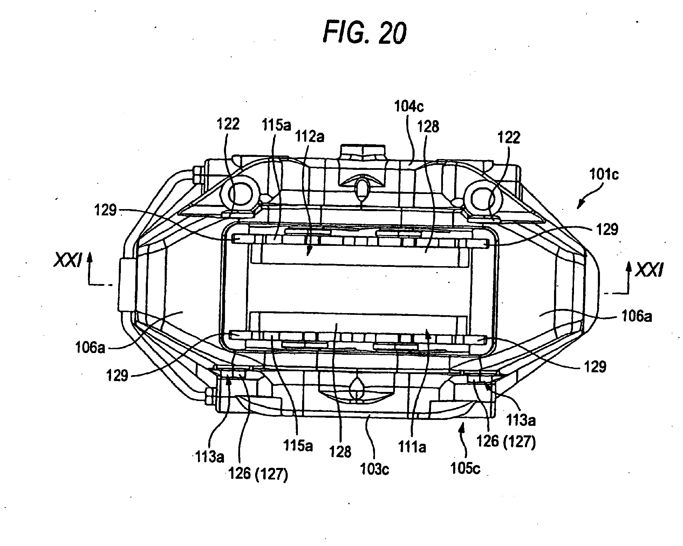

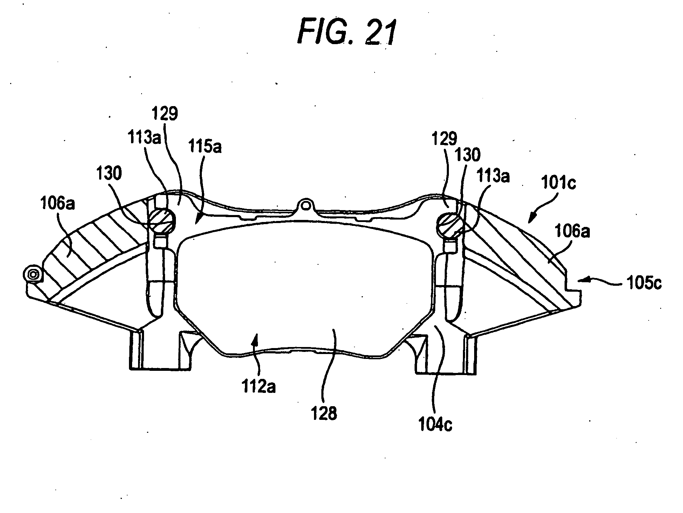

Figs.18 through 26 show an embodiment not falling under the scope of the invention insofar as it does not comprise a bridge portion. A number of pieces of pins is reduced and it is capable of supporting a large brake torque by devising positions of installing outer side coupling pins 13a, 13a made to bridge two outer and inner body portions 3c, 4c constituting a caliper 5c and shapes of end edge portions of pressure plates 15a constituting the two outer and inner pads 11a, 12a. Constitution and operation of other portion are similar to those of the second example of the background art structure shown in Figs.30 through 33, and a detailed explanation is given of the constitution of the second example of the background art structure in Patent Reference 8. Therefore, an explanation of constituent portions similar to those of the second example of the background art structure are omitted or simplified and an explanation will be given centering on a characteristic portion of the example as follows.

The caliper 105c constituting the disc brake 101c is integrally produced by subjecting an aluminum alloy to diecast forming, and includes the outer body portion 103c and the inner body portion 104c and a pair of connecting portions 106a, 106a connecting both end portions of the outer and inner body portions 103c, 104c in a rotational direction of the rotor 2. The pair of outer side coupling pins 113a, 113a are provided in a state of being respectively made to bridge the outer and inner body portions 103c, 104c between outer end portions in a radial direction of portions proximate to both ends of middle portions in a peripheral direction of the outer body portion 103c and the inner body portion 104c and portions proximate to the two connecting portions 106a, 106a. The two outer side coupling pins 113a, 113a are provided at portions proximate to outer sides in the radial direction of an outer peripheral edge of the rotor 2 at positions interposing the two outer and inner pads 111a, 112a from both sides in the peripheral direction.

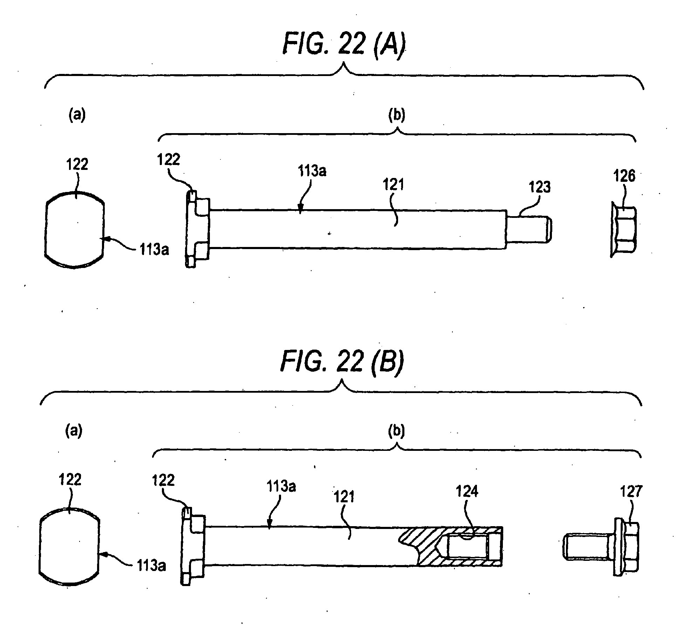

The two outer side coupling pins 113a, 113a are produced by a shape as shown by Fig. 22(A) or Fig. 22(B) by a metal material having a high Young's ratio (difficult to be deformed elastically and having a rigidity against a force in a tensile direction) and excellent in wear resistance as in a ferrous alloy of stainless steel, bearing steel or the like. The outer side coupling pin 113a shown in Fig. 22 (A) includes a rod portion 121 having a section in a circular shape, an oval shape flange portion 122 in a shape of an outward directed flange fixedly provided to a base end portion of the rod portion 121, and a male screw portion 123 having a diameter smaller than that of the rod portion 121 formed at a front end portion of the rodportion 121 concentrically with the rodportion 121. Further, the outer side coupling pin 113a shown in Fig. 22 (B) is formed with a screw hole 124 opened to a center portion of a front end face of the rod portion 121 at a front end portion of the rod portion 121.

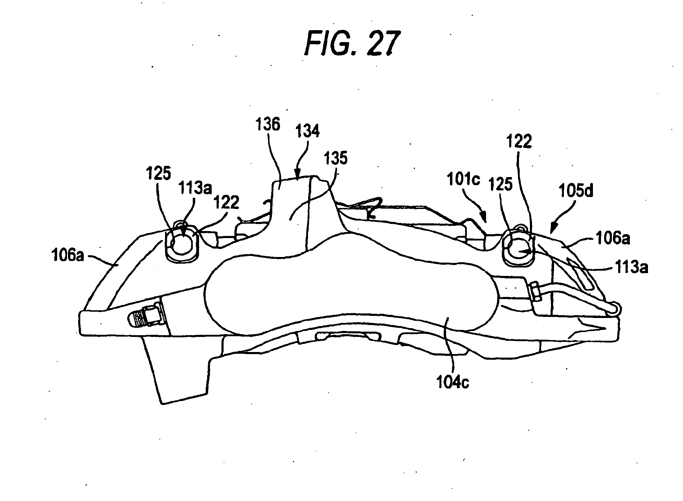

Even in a case of using the outer side coupling pin 113a of either of the structures, the rod portions 121 of the outer side coupling pins 113a are inserted through through holes provided at portions proximate to outer diameters of both end portions of the outer and inner body portions 103c, 104c, and the flange portion 122 is engaged with an engaging recess portion 125 (refer to Fig.27 showing a fifth exemplary embodiment mentioned later) formed at an outer side face of the inner body portion 104c. Under the state, the outer side coupling pin 113a is hampered from being rotated, and therefore, a nut 126 is screwed to the male screw portion 123 formed at the front end portion of the outer side coupling pin 113a, or a bolt 127 is screwed to the screw hole 124. Further, portions proximate to base ends of the outer side faces of the outer and inner body portions 103c, 104c are pressed between head portions of the nuts 126 or the bolts 127 and the flange portions 122. Further, portions proximate to both ends of the outer and inner body portions 103c, 4c are proximate to the connecting portions 106a, 106a and are provided with high rigidities. Therefore, when a torque of fastening the nut 126 or the bolt 127 is properly restricted, deformation of the outer and inner body portions 103c, 104c in accordance with fastening the nut 126 or the bolt 127 can be disregarded.

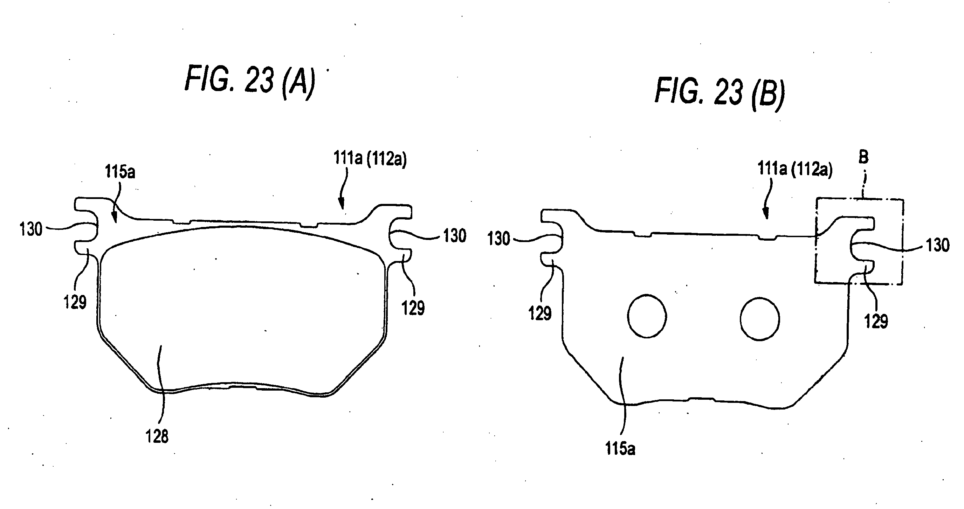

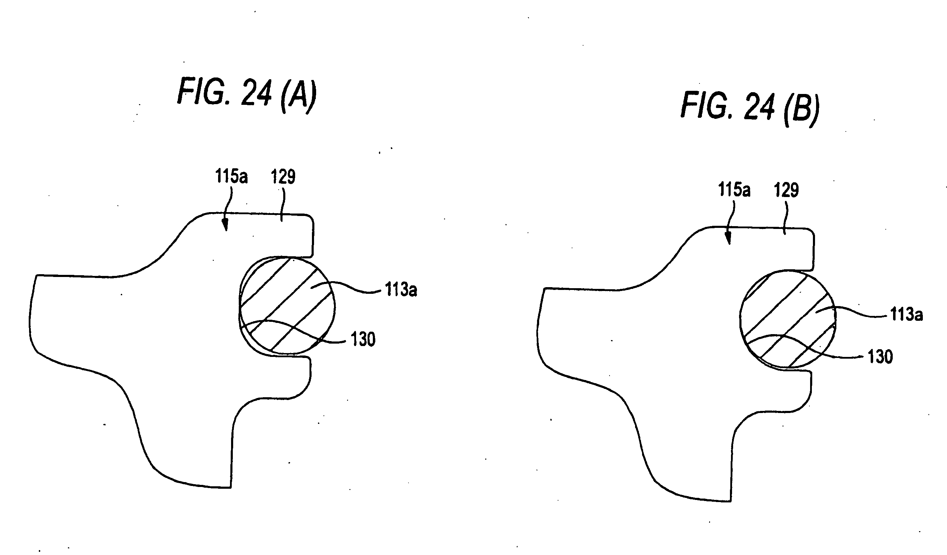

On the other hand, as shown by Figs. 23(A) and 23(B), the two outer and inner pads 111a, 112a are respectively constituted by attaching linings 128 to faces of both side faces of the pressure plate 115a opposed to the rotor 2. Particularly, in the case of the fourth exemplary embodiment, portions of the pressure plates 115a constituting the two pads 111a, 112a disposed at both end portions in the rotational direction of the rotor and outer sides in the radial direction of the outer peripheral edge of the rotor 2 are formed with extended portions 129, 129 more projected than the linings 128 in the rotating direction. Further, the respective extended portions 129, 129 are formed with recess portions 130, 130 in a notch-like shape. The respective recess portions 130, 130 are opened at both end edges in the rotating direction of end edges of the pressure plates 115a, and are provided with a size capable of inwardly fitting middle portions of the two outer side coupling pins 113a, 113a to respective inner sides without play. That is, the respective recess portions 130, 130 are constituted by substantially a channel-like shape as shown by Fig.24 (A) or a substantially U-like shape as shown by Fig.24 (B) and are provided with a width dimension slightly larger than an outer diameter of the middle portions of the two outer side coupling pins 113a, 113a and a depth dimension larger than 1/2 of the outer diameter.

In order to support the two pads 111a, 112a by the caliper 105c by the two outer side coupling pins 113a, 113a, first, the outer side coupling pin 113a on one side is made to bridge the outer and inner body portions 103c, 104c. Successively, the recess portions 130, 130 on one end sides of the pressure plates 115a, 115a constituting the two pads 111a, 112a are engaged with the outer side coupling pin 113a on the one side, and the two pads 111a, 112a are swung centering on the outer side coupling pin 113a on one side to be brought to between the outer and inner body portions 103c, 104c. Thereafter, the remaining outer side coupling pin 113a is made to bridge the outer and inner body portions 103c, 104c while being engaged with the recess portions 130, 130 on other end side of the pressure plates 115a, 115a constituting the two pads 111a, 112a. Under the state, the two pads 111a, 112a are supported by the caliper 105c displaceably in an axial direction of the rotor 2. Further, the two pads 111a, 112a are prevented from being drawn out to an inner diameter side and an outer diameter side of the rotor 2 based on an engagement between the two outer side coupling pins 113a, 113a and the respective recess portions 130, 130. That is, the two pads 111a, 112a are hampered from being displaced in the radial direction of the rotor 2 by bringing outer peripheral faces of the middle portions of the two outer side coupling pins 113a, 113a and two inner side faces of the respective recess portions 130, 130 into contact with each other or making the outer peripheral faces and the two inner side faces opposedly proximate to each other. An operation of detaching the two pads 111a, 112a from the caliper 105c is carried out by a procedure reverse to that of the integrating operation.

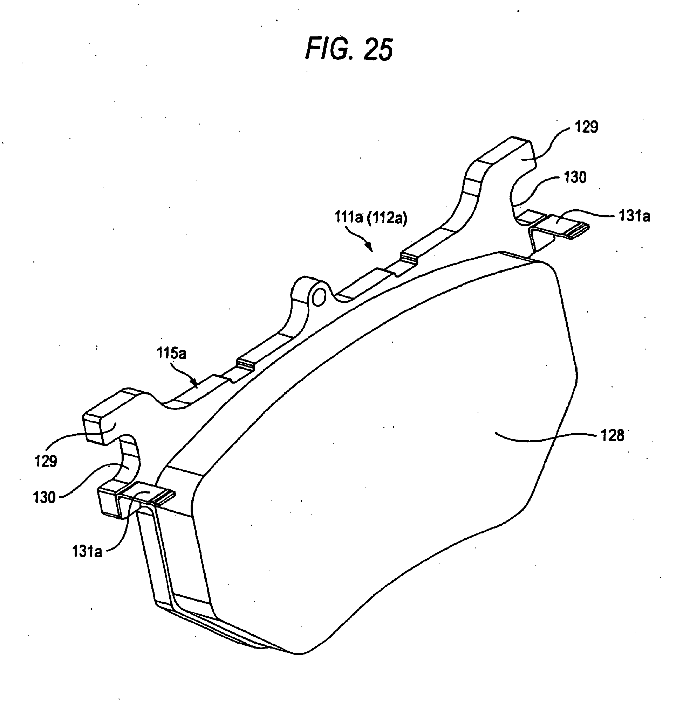

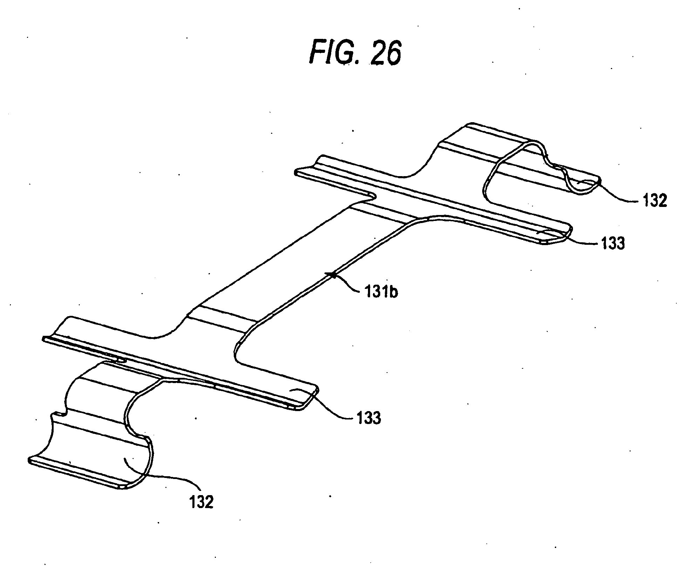

Further, pad clips 131a, 131a as shown by Fig.25, or a pad clip 131b as shown by Fig.26 is provided between the two pads 111a, 112a and the two outer side coupling pins 113a, 113a such that the two pads 111a, 112a are not rattled by a vibration or the like in running in a state of integrating the two pads 111a, 112a to the caliper 105c as described above. The pad clips 131a, 131a shown in Fig. 25 are produced by making elastic metal plates of stainless spring steel or the like by an L-like shape, and base portions thereof are fixed to both end portions of the pressure plates 115a constituting the pads 111a (and 112a) and portions thereof proximate to the recess portions 130, 130 by welding, adhering, calking or the like. In integrating, front end portions of the two pad clips 131a, 131a elastically press the outer peripheral faces of the middle portions of the two outer side coupling pins 113a, 113a to restrain the two pads 111a, 112a from being rattled. Further, the pad clip 131b shown in Fig.26 is respectively provided with locking portions 132, 132 at both end portions thereof and restraining portions 133, 133 at positions of two portions of the middle portion. The pad clip 131b restrains the two pads 111a, 112a from being rattled by bringing the two restraining portions 133, 133 into elastic contact with outer peripheral edges of the two pressure plates 115a, 115a constituting the two pads 111a (and 112a) in a state of locking the two locking portions 132, 132 to the middle portions and inner side faces in the radial direction of the rotor 2 of the two outer side coupling pins 113a, 113a.

When braking is carried out by constituting the disc brake by being combined with the rotor 2 in a state of integrating respective constituent members as described above, the two pads 111a, 112a are pressed in the rotational direction of the rotor 2 by a friction between the respective linings 128, 128 and side faces of the rotor 2. As a result, in the respective recess portions 130, 130 provided at the both end portions of the two pressure plates 115a, 115a constituting the two pads 111a (and 112a), depth end faces of a pair of the recess portions 130, 130 present on an anchor side (outer side of rotation of the rotor 2), and the outer peripheral face of the middle portion of the outer side coupling pin 113a on the anchor side in the two outer side coupling pins 113a, 113a are brought into strong contact with each other. Further, a brake torque applied to the two pads 111a, 112a in accordance with braking is supported by the caliper 105c by way of the outer side coupling pin 113a on the anchor side. The outer side coupling pin 113a can support a large brake torque by ensuring a sufficient rigidity since the both end portions are supported by the caliper 105c.

By only two pieces of the outer side coupling pins 113a, 113a, the two pads 111a, 112a are integrated to the caliper 105c so as not to be detached therefrom, at the same time, the large brake torque applied to the two pads 111a, 112a can be supported. Therefore, light-weighted formation and a reduction in cost of the opposed piston type disc brake can be achieved.

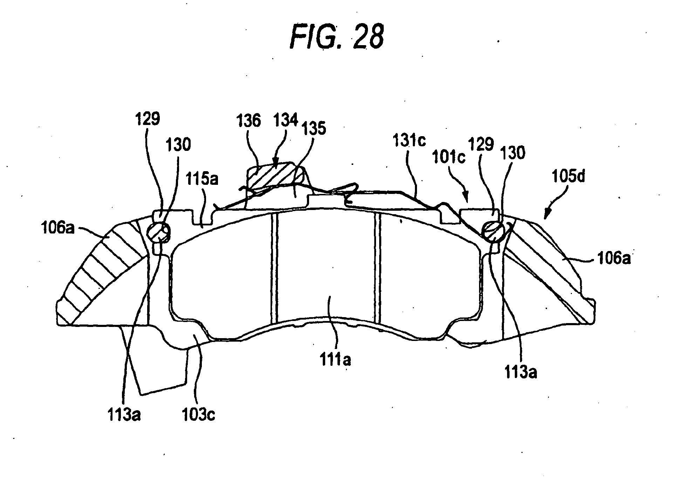

Figs.27 through 28 show a further exemplary embodiment of the invention. Whereas in the above-described previous embodiment, the invention is applied to a disc brake for braking a rear wheel, in the case of this embodiment, there is shown a case of applying the invention to a disc brake for braking a front wheel. Therefore, in the case of this embodiment, a rigidity of a caliper 105d is increased more than that of the caliper 105c of the above-described fourth exemplary embodiment. That is, in braking an automobile, by moving a center gravity in accordance with inertia, a burden on a brake is larger on a front wheel side than on a rear wheel side. Further, forces for pressing the respective pads to the rotor are increased by making a diameter of a cylinder larger than that on the rear wheel side and making hydraulic pressure introduced into the cylinder higher than that of the front wheel side. As a result, in braking, a force applied in a direction of separating the two outer and inner cylinder portions constituting the caliper is increased. In order to generate a brake force in accordance with an equal amount applied to a brake pedal by preventing deformation of the caliper regardless of the large force, the rigidity of the caliper needs to be increased.

In view of such a situation, in the case of this embodiment, a bridge portion 134 is made to bridge the outer and inner body portions 103c, 104c constituting the caliper 105d. The bridge portion 134 is constituted by a gate shape comprising a pair of leg portions 135 and a connecting portion 136 for connecting front end portions of the two leg portions 135. The bridge portion 134 is provided integrally with the outer and inner body portions 103c, 104c by making base end portions of the two leg portions 135 continuous to the outer peripheral faces of the outer and inner body portions 103c, 104c. In the case of this exemplary embodiment, the bridge portion 134 is provided in a state of being deviated to an anchor side (left sides of Figs.27 through 28) in braking in an advancing state. Further, although the outer and inner body portions 103c, 104c are provided with a pair of cylinders by being divided respectively to the anchor side and a counter anchor side, an inner diameter of a cylinder on the anchor side is made to be larger than an inner diameter of the cylinder on the counter anchor side, respectively. By the constitution, a force of pressing the outer pad 111a and the inner pad 112a (with regard to the inner pad 112a, refer to Figs.18, 20, 21) is made to be larger on the anchor side than on the counter anchor side. Further, a pad clip 131c for preventing rattling is provided between the connecting portion 136 and the pressure plates 115a constituting the two pads 111a, 112a.

According to the disc brake 1c of the opposed piston type of this exemplary embodiment constituted as described above, there can be realized a structure of effectively restraining deformation of the outer and inner body portions 103c, 104c and a structure easy to achieve light-weighted formation by thin-walled formation of the outer and inner body portions 103c, 104c. That is, the middle portions of the outer and inner body portions 103c, 104c are coupled by the bridge portion 134, and therefore, regardless of the force in the direction of expanding an interval between the outer and inner body portions 103c, 104c applied between the outer and inner body portions 103c, 104c in braking, the interval between the outer and inner body portions 103c, 104c is not expanded, and the deformation of the outer and inner body portions 103c, 104c can effectively be restrained also in braking.

Further, the bridge portion 134 is deviated to the anchor side, and therefore, operation of attaching and detaching the two pads 111a, 112a to and from the caliper 105d can easily be carried out while ensuring the rigidity of coupling the outer and inner body portions 103c, 104c by the bridge portion 134 while achieving small-sized and light-weighted formation of the caliper 105d. In the attaching an detaching operation, in a state of detaching the outer side coupling pin 113a on the counter anchor side (right sides of Figs.27 through 28), the two pads 111a, 112a are drawn from and inserted into between the pair of connecting portions 106a, 106a. Constitution and operation of other portion are similar to those of the fourth exemplary embodiment, and therefore, illustration and explanation of equivalent portions will be omitted.

It will be apparent to those skilled in the art that various modifications and variations can be made to the described preferred embodiments of the present invention without departing from the scope of the invention. Thus, it is intended that the present invention cover all modifications and variations of this invention consistent with the scope of the appended claims and their equivalents.

## Claims

1. An opposed piston type disc brake comprising:
a caliper (5c, 105c) integrating outer and inner body portions (3c, 4c, 103c, 104c) and a pair of connecting portions (6a, 106a), wherein the outer and inner body portion (3c, 4c, 103a, 104a) are arranged by interposing a rotor (2) between the outer and inner body portions (3c, 4c, 103c, 104c), and both end portions of the outer and inner body portions (3c, 4c, 103c, 104c) in a rotational direction of the rotor (2) are connected by the pair of connecting portions (6a, 106a) at positions outward in a radial direction of the rotor (2) from an outer peripheral edge of the rotor (2);
a plurality of cylinders respectively provided to the outer and inner body portions (3c, 4c, 103c, 104c) so as to be opposed to each other;
a plurality of pistons fitted to the respective cylinders so as to be displaceable in an axial direction of the rotor (2);
two pads (11a, 12a, 11b, 12b, 111a, 112a) respectively supported by the outer and inner body portions (3c, 4c, 103c, 104c) so as to be displaceable in the axial direction;
a plurality of pad supporting portions (17, 13a, 113a 36, 130) configured to hamper the two pads (11a, 12a, 11b, 12b, 111a, 112a) from being displaced to inner sides in the radial direction; and
a pair of outer side coupling pins (13a, 113a) arranged at portions outer in the radial direction more than the outer peripheral edge of the rotor (2) so as to be opposed to two end edges of pressure plates (15a, 15b, 115a) of the two pads (11a, 12a, 11b, 12b, 111a, 112a) in the rotational direction and configured to bridge the outer and inner body portions (3c, 4c, 103c, 104c), **characterized by**
a bridge portion (20a, 134) configured to bridge the outer and inner body portions (3c, 4c, 103c, 104c) at portions outer in the radial direction more than the outer peripheral edge of the rotor so as to hamper the outer and inner body portions (3c, 4c, 103c, 104c) from being displaced in directions of being separated from each other,
wherein the bridge portion (20a, 134) is integrally provided to the caliper (5c, 105c) at a single portion on a middle portion of the outer and inner body portions (3c, 4c, 103c, 104c) in the rotational direction, wherein the bridge portion (20a, 134) is provided at a position deviated to one side from centers of the outer and inner body portions (3c, 4c, 103c, 104c) in the rotational direction,
at least one of the outer side coupling pins (13a, 113a) on the other side in the rotating direction is configured to be attachable and detachable, and
in a state of detaching the one of torque receiving pin (13a, 113a) on the other side, there is present a gap between one of the connecting portions (6a, 106a) on the other side and the bridge portion (20a, 134) so that the pads (11a, 12a, 11b, 12b, 111a, 112a) are capable of being drawn and inserted through the gap.

2. The opposed piston type disc brake according to Claim 1, wherein the pad supporting portions (17) are projected from inner side faces of the respective outer and inner body portions (3c, 4c) at portions inner in the radial direction more than the outer peripheral edge of the rotor (2), and the pad supporting portions (17) are configured to be engaged with the respective two pads (11a, 12a) so as to hamper the two pads (11a, 12a) from being displaced to inner sides in the radial direction.

3. The opposed piston type disc brake according to Claim 2, wherein the respective pad supporting portions (17) are engaged with the respective pressure plates (15a) of the two pads (11a, 12a) so as to be capable of supporting a brake torque applied to the two pads (11a, 12a).

4. The opposed piston type disc brake according to Claim 2, wherein the respective pad supporting portions (17) comprise locking pins (17) projected from the inner side faces of the respective outer and inner body portions (3c, 4c) at the portions inner in the radial direction more than the outer peripheral edge of the rotor (2).

5. The opposed piston type disc brake according to Claim 1, wherein the respective pad supporting portions are configured by the outer side coupling pins (13a, 113a) and recess portions (36, 130) provided on the respective pressure plates (15b, 115a), wherein the recess portions (36, 130) are arranged on the end edges of pressure plates (15b, 115a) in the rotational direction at portions outer in the radial direction more than the outer peripheral edge of the rotor (2) and the respective outer side coupling pins (13a, 113a) are capable of entering into the recess portions (36, 130),
a brake torque applied to the two pads (11b, 12b, 111a, 112a) is capable of being supported by an engagement of depth end surfaces of the recess portions (36, 130) with outer peripheral surfaces of the respective outer side coupling pins (13a, 113a), and
an engagement of inner surfaces of the recess portions (36, 130) with the outer peripheral surfaces of the respective outer side coupling pins (13a, 113a) hampers the two pads (11 b, 12b, 111 a, 112a) from being displaced to inner sides in the radial direction.

6. The opposed piston type disc brake according to Claim 1, wherein both end portions of the two outer side coupling pins (13a, 113a) are engaged with the outer and inner body portions (3c, 4c, 103c, 104c) so as to be able to support a force exerted to the outer and inner body portions (3c, 4c, 103c, 104c) in the directions separating the outer and inner body portions (3c, 4c, 103c, 104c) from each other in braking.

## Patentansprüche

1. Eine Gegenkolbenscheibenbremse aufweisend:
eine Zange (5c, 105c), die äußere und innere Körperabschnitte (3c, 4c, 103c, 104c) und ein Paar Verbindungsabschnitte (6a, 106a) integriert, wobei der äußere und innere Körperabschnitt (3c, 4c, 103a, 104a) durch Einfügen eines Rotors (2) zwischen den äußeren und inneren Körperabschnitten (3c, 4c, 103, 104c) angeordnet ist, und beide Endabschnitte der äußeren und inneren Körperabschnitte (3c, 4c, 103c, 104c) in einer Drehrichtung des Rotors (2) durch das Paar Verbindungsabschnitte (6a, 106a) verbunden sind, an Positionen in einer radialen Richtung des Rotors (2) äußerlich von einer äußeren peripheren Kante des Rotors (2);
eine Vielzahl von Zylindern, die entsprechend an den äußeren und inneren Körperabschnitten (3c, 4c, 103c, 104c) so angeordnet sind, dass sie einander gegenüberliegen;
eine Vielzahl von Kolben, die in die entsprechenden Zylinder eingepasst sind, um in einer axialen Richtung des Rotors (2) verschieblich zu sein;
zwei Klötze (11a, 12a, 11b, 12b, 111a, 112a), die entsprechend durch die äußeren und inneren Körperabschnitte (3c, 4c, 103c, 104c) unterstützt sind, um in der axialen Richtung verschieblich zu sein;
eine Vielzahl an Klotz-Unterstützungsabschnitten (17, 13a, 113a, 36, 130), die derart konfiguriert sind, dass die beiden Klötze (11 a, 12a, 11 b, 12b, 111 a, 112a) darin gehindert werden, zu inneren Seiten in der radialen Richtung verschoben zu werden; und
ein Paar außenseitige verbindende Bolzen (13a, 113a), angeordnet an Abschnitten, die in radialer Richtung weiter außen angeordnet sind als die äußere periphere Kante des Rotors (2), um zwei Endkanten von Druckplatten (15a, 15b, 115a) der beiden Klötze (11a, 12a, 11b, 12b, 111 a, 112a) in der Drehrichtung gegenüberzuliegen, und die konfiguriert sind, die äußeren und inneren Körperabschnitte (3c, 4c, 103c, 104c) zu überspannen,
**gekennzeichnet durch,**
einen Überbrückungsabschnitt (20a, 134), der konfiguriert ist, die äußeren und inneren Körperabschnitte (3c, 4c, 103c, 104c) an in der radialen Richtung weiter außen als die äußere periphere Kante des Rotors gelegenen Abschnitten zu überspannen, um die äußeren und inneren Körperabschnitte (3c, 4c, 103c, 104c) darin zu behindern, in Richtungen verschoben zu werden in denen diese voneinander getrennt werden,
wobei der Brückenabschnitt (20a, 134) integral zu der Zange (5c, 105c) an einem einzelnen Teil auf einem in der Drehrichtung mittleren Abschnitt der äußeren und inneren Körperabschnitte (3c, 4c, 103c, 104c) ausgebildet ist, wobei der Überbrückungsabschnitt (20a, 134) an einer, von den Zentren der äußeren und inneren Körperabschnitte (3c, 4c, 103c, 104c) zu einer Seite abweichenden Position, in Drehrichtung vorgesehen ist,
und wenigstens einer der außenseitigen verbindenden Bolzen (13a, 113a), auf der in Drehrichtung anderen Seite, konfiguriert ist, anbringbar und ablösbar zu sein, und
in einem Zustand, in dem einer der Drehmoment aufnehmenden Bolzen (13a, 113a) auf der anderen Seite abgelöst ist, dort eine Aussparung zwischen einem der Verbindungsabschnitte (6a, 106a) auf der anderen Seite und dem Überbrückungsabschnitt (20a, 134) vorhanden ist, so dass die Klötze (11 a, 12a, 11 b, 12b, 111 a, 112a) geeignet sind, **durch** die Aussparung gezogen und eingebracht zu werden.

2. Die Gegenkolbenscheibenbremse nach Anspruch 1, wobei die Klotz-Unterstützungsabschnitte (17) von inneren Seitenflächen der entsprechenden äußeren und inneren Körperabschnitte (3c, 4c) an in radialer Richtung weiter innen als die äußere periphere Kante des Rotors (2) angeordneten Abschnitten hervorstehend sind,
und die Klotz-Unterstützungsabschnitte (17) konfiguriert sind, mit den entsprechenden zwei Klötzen (11a, 12a) in Eingriff zu sein, um die beiden Klötze (11a, 12a) darin zu hindern in radialer Richtung zu inneren Seiten verschoben zu werden.

3. Die Gegenkolbenscheibenbremse nach Anspruch 2, wobei die entsprechenden Klotz-Unterstützungsabschnitte (17) mit den entsprechenden Druckplatten (15a) der beiden Klötze (11a, 12a) in Eingriff gebracht sind, um geeignet zu sein, ein Brems-Drehmoment, abstützen zu können, welches auf die beiden Klötze (11a, 12a) aufgebracht ist.

4. Die Gegenkolbenscheibenbremse nach Anspruch 2, wobei die entsprechenden Klotz-Unterstützungsabschnitte (17) Arretierbolzen (17) aufweisen, die hervorstehend von den inneren Seitenflächen der entsprechenden äußeren und inneren Körperabschnitte (3c, 4c) sind, an in radialer Richtung weiter innen als die äußere periphere Kante des Rotors (2) liegenden Positionen.

5. Die Gegenkolbenscheibenbremse nach Anspruch 1, wobei die entsprechenden Klotz-Unterstützungsabschnitte durch die außenseitigen verbindenden Bolzen (13a, 113a) und an den entsprechenden Druckplatten (15b, 115a) vorgesehene Ausnehmungsabschnitte (36, 130) geformt sind, wobei die Ausnehmungsabschnitte (36, 130) an den Endkanten der Druckplatten (15b, 115a), an in der Drehrichtung weiter außen als die äußere periphere Kante des Rotors (2) gelegenen Positionen angeordnet sind, und die entsprechenden außenseitigen verbindenden Bolzen (13a, 113a) geeignet sind, in die Ausnehmungsabschnitte (36, 130) einzutreten,
wobei ein auf die zwei Klötze (11b, 12b, 111a, 112a) aufgebrachtes Brems-Drehmoment durch einen Eingriff von tiefen Endflächen des Ausnehmungsabschnittes (36, 130) mit äußeren peripheren Flächen der entsprechenden außenseitigen verbindenden Bolzen (13a, 113a) abgestützt werden kann, und
ein Eingreifen der inneren Oberflächen der Ausnehmungsabschnitte (36, 130) mit den äußeren peripheren Oberflächen der entsprechenden außenseitigen verbindenden Bolzen (13a, 113a) die beiden Klötze (11b, 12b, 111a, 112a) darin behindert, in der radialen Richtung zu Innenseiten verrückt zu werden.

6. Die Gegenkolbenscheibenbremse nach Anspruch 1, worin beide Endabschnitte der zwei außenseitigen verbindenden Bolzen (13a, 113a) in Eingriff mit den äußeren und inneren Körperabschnitten (3c, 4c, 103c, 104c) sind, um geeignet zu sein, eine während eines Bremsens auf die äußeren und inneren Körperabschnitte (3c, 4c, 103c, 104c), in die äußeren und inneren Körperabschnitte (3c, 4c, 103c, 104c) trennende Richtungen aufgebrachte Kraft abstützen zu können.

## Revendications

1. Frein à disque du type à pistons opposés, comprenant :
un étrier (5c, 105c) intégrant des portions de corps extérieure et des portions de corps intérieure (3c, 4c, 103c, 104c) et une paire de portions de connexion (6a, 106a), dans lequel la portion de corps extérieure et la portion de corps intérieure (3c, 4c, 103a, 104a) sont agencées de manière à interposer un rotor (2) entre les portions de corps extérieure et les portions de corps intérieure (3c, 4c, 103c, 104c), et les deux portions terminales des portions de corps extérieure et des portions de corps intérieure (3c, 4c, 103c, 104c), dans une direction de rotation du rotor (2), sont connectées par la paire de portions de connexion (6a, 106a) à des positions à l'extérieur dans une direction radiale du rotor (2) depuis une bordure périphérique extérieure du rotor (2);
une pluralité de cylindres respectivement prévus dans les portions de corps extérieure et les portions de corps intérieure (3c, 4c, 103c, 104c) de manière à être opposés les uns aux autres ;
une pluralité de pistons montés dans les cylindres respectifs de manière à être déplaçables dans une direction axiale du rotor (2) ;
deux patins (11a, 12a, 11b, 12b, 111a, 112a) respectivement supportés par les portions de corps extérieure et par les portions de corps intérieure (3c, 4c, 103c, 104c) de manière à être déplaçables dans la direction axiale ;
une pluralité de portions de support de patins (17, 13a, 113a, 36, 130) configurées pour empêcher que les deux patins (11a, 12a, 11b, 12b, 111a, 112a) soient déplacés vers des côtés intérieurs dans la direction radiale ;
et une paire de tiges de couplage latérales (13a, 113a) agencées au niveau de portions à l'extérieur dans la direction radiale plus loin que la bordure périphérique extérieure du rotor (2) de manière à être opposées à deux bordures terminales de plaques de pressage (15a, 15b, 115a) des deux patins (11a, 12a, 11b, 12b, 111a, 112a) dans la direction de rotation, et configurées pour ponter les portions de corps extérieure et lesa portions de corps intérieure (3c, 4c, 103c, 104c), **caractérisé par** :
une portion de pontage (20a, 134) configurée pour ponter les portions de corps extérieure et les portions de corps intérieure (3c, 4c, 103c, 104c) à des portions à l'extérieur dans la direction radiale plus loin que la bordure périphérique extérieure du rotor de manière à empêcher que les portions de corps extérieure et les portions de corps intérieure (3c, 4c, 103c, 104c) soient déplacées dans des directions dans lesquelles elles sont séparées l'une de l'autre,
dans lequel la portion de pontage (20a, 134) est prévue de façon intégrale sur l'étrier (5c, 105c) au niveau d'une portion unique sur une portion médiane des portions de corps extérieure et des portions de corps intérieure (3c, 4c, 103c, 104c) dans la direction de rotation, de sorte que la portion de pontage (20a, 134) est prévue à une position déviée vers un côté depuis les centres desportions de corps extérieure et des portions de corps intérieure (3c, 4c, 103c, 104c) dans la direction de rotation,
l'une au moins des tiges de couplage latérales extérieures (13a, 113a) sur l'autre côté dans la direction de rotation est configurée de manière à pouvoir être attachée et détachée, et
dans un état dans lequel l'une des tiges d'encaissement de couple (13a, 113a) sur l'autre côté est détachée, il se présente un intervalle entre l'une des portions de connexion (6a, 106a) sur l'autre côté et la portion de pontage (20a, 134) de sorte que les patins (11a, 12a, 11b, 12b, 111a, 112a) sont capables d'être enlevés et insérés à travers l'intervalle.

2. Frein à disque du type à pistons opposés, selon la revendication 1, dans lequel les portions de support de patins (17) se projettent depuis des faces latérales intérieures des portions de corps extérieure et des portions de corps intérieure respective (3c, 4c) à des portions à l'intérieur dans la direction radiale plus loin que la bordure périphérique extérieure du rotor (2), et les portions de support de patins (17) sont configurées pour être engagées avec les deux patins respectifs (11a, 12a) de manière à empêcher que les deux patins (11a, 12a) soient déplacés vers des côtés intérieurs dans la direction radiale.

3. Frein à disque du type à pistons opposés, selon la revendication 2, dans lequel les portions de support de patins (17) respectives sont engagées avec les plaques de pressage (15a) respectives des deux patins (11a, 12a) de manière à être capables de supporter un couple de freinage appliqué aux deux patins (11a, 12a).

4. Frein à disque du type à pistons opposés, selon la revendication 2, dans lequel les portions de support de patins (17) respectives comprennent des tiges de blocage (17) qui se projettent depuis des faces latérales intérieures des portions de corps extérieure et des portions de corps intérieure (3c, 4c) respectives au niveau des portions à l'intérieur dans la direction radiale plus loin que la bordure périphérique extérieure du rotor (2).

5. Frein à disque du type à pistons opposés, selon la revendication 1, dans lequel les portions de support de patins respectives sont configurées par les tiges de couplage latérales extérieures (13a, 113a) et par les portions évidées (36, 130) prévues sur les plaques de pressage respectives (15b, 115a), dans lequel les portions évidées (36, 130) sont agencées sur les bordures terminales des plaques de pressage (15b, 115a) dans la direction de rotation à des portions à l'extérieur dans la direction radiale plus loin que la bordure périphérique extérieure du rotor (2), et les tiges de couplage latérales extérieures (13a, 113a) respectives sont capables d'entrer dans les portions évidées (36, 130),
un couple de freinage appliqué aux deux patins (11b, 12b, 111a, 112a) est capable d'être supporté par un engagement de surfaces terminales en profondeur des portions évidées (36, 130) avec des surfaces périphériques extérieures des tiges de couplage latérales extérieures (13a, 113a) respectives, et
un engagement des surfaces intérieures des portions évidées (36, 130) avec les surfaces périphériques extérieures des tiges de couplage latérales extérieures (13a, 113a) respectives empêche que les deux patins (11b, 12b, 111a, 112a) soient déplacés vers des côtés intérieurs dans la direction radiale.

6. Frein à disque du type à pistons opposés, selon la revendication 1, dans lequel les deux portions terminales des deux tiges de couplage latérales extérieures (13a, 113a) sont engagées avec les portions de corps extérieure et les portions de corps intérieure (3c, 4c, 103c, 104c) de manière à être capables de supporter une force exercée sur les portions de corps extérieure et les portions de corps intérieure (3c, 4c, 103c, 104c) dans des directions qui séparent les portions deux corps extérieure et les portions de corps intérieure (3c, 4c, 103c, 104c) l'une par rapport à l'autre lors du freinage.
